# EUROPEAN PATENT SPECIFICATION

(11) **EP 2 842 743 B1**
(45) Date of publication and mention of the grant of the patent: **27.07.2016**
(21) Application number: 14182808.7
(22) Date of filing: 29.08.2014
(51) Int. Cl.: B41C 1/05, B41N 1/12

(54) **Relief printing plate precursor for laser engraving and process for producing same, and relief printing plate and process for making same**
Reliefdruckplattenvorläufer für Lasergravierung und Verfahren zu deren Herstellung und Reliefdruckplatte und Verfahren zu deren Herstellung
Précurseur de plaque d'impression en relief pour gravure au laser, son procédé de fabrication, plaque d'impression en relief et procédé de fabrication associé

(30) Priority: 30.08.2013 JP 2013180174
(43) Date of publication of application: 04.03.2015
(73) Proprietor: Fujifilm Corporation, Tokyo (JP)
(72) Inventor: Yasuhara, Yuichi, Shizuoka (JP)
(74) Representative: Hoffmann Eitle

(56) References cited:
- JP-A- 2009 262 370
- JP-A- 2010 247 368
- US-A1- 2005 115 920

## Description

The present invention relates to a relief printing plate precursor for laser engraving and a process for producing the same, and a relief printing plate and a process for making the same.

A large number of so-called "direct engraving CTP methods", in which a relief-forming layer is directly engraved by means of a laser are proposed. In the method, a laser light is directly irradiated to a relief printing plate precursor to cause thermal decomposition and volatilization by photothermal conversion, thereby forming a concave part. Differing from a relief formation using an original image film, the direct engraving CTP method can control freely relief shapes. Consequently, when such image as an outline character is to be formed, it is also possible to engrave that region deeper than other regions, or, in the case of a fine halftone dot image, it is possible, taking into consideration resistance to printing pressure, to engrave while adding a shoulder. With regard to the laser for use in the method, a high-power carbon dioxide laser is generally used. In the case of the carbon dioxide laser, all organic compounds can absorb the irradiation energy and convert it into heat. On the other hand, inexpensive and small-sized semiconductor lasers have been developed, wherein, since they emit visible lights and near infrared lights, it is necessary to absorb a laser light and convert it into heat.

As a resin composition for laser engraving, those described in JP-A-2010-42657 (JP-A denotes a Japanese unexamined patent application publication) are known.

US 2005/115920 A1 describes that in a laser-engravable flexographic printing element, the relief-forming layer comprises a conductivity carbon black having a specific surface area of at least 150 m²/g and a DBP number of at least 150 ml/100g.

An object of the present invention is to provide a relief printing plate precursor for laser engraving that is excellent in rinsing properties for engraving residue and engraving sensitivity and can give a sharp engraved shape, and a process for producing the same. In addition, another object of the present invention is to provide a resin composition for laser engraving that is appropriately used in such a printing plate precursor. The still another object of the present invention is to provide a relief printing plate obtained from the printing plate precursor, and a process for making the same.

The above objects of the present invention has been achieved by the following <1> and <10> to <13>. Preferable embodiments <2> to <9> will also be described below.
<1> A relief printing plate precursor for laser engraving comprising a relief-forming layer formed of a resin composition for laser engraving, or a crosslinked relief-forming layer obtained by crosslinking the relief-forming layer formed of the resin composition for laser engraving, wherein the resin composition for laser engraving comprises a binder polymer as Component A, and carbon black of which pH is higher than 6 and an average particle size when being dispersed into water is equal to or less than 500 nm as Component B,
<2> the relief printing plate precursor for laser engraving as described in <1>, wherein pH of Component B is higher than 6 and equal to or lower than 9 (more preferably higher than 6 and equal to or lower than 8, even more preferably 6.5 to 8.0, and most preferably 7.0 to 8.0),
<3> the relief printing plate precursor for laser engraving as described in <1> or <2>, wherein the resin composition for laser engraving comprises Component B in an amount of equal to or greater than 1 mass % and equal to or less than 50 mass % (more preferably 1 mass % to 40 mass %, even more preferably 1 mass % to 30 mass %, and particularly preferably 3 mass % to 20 mass %) relative to the total amount of the solid content of the resin composition for laser engraving,
<4> the relief printing plate precursor for laser engraving as described in any one of <1> to <3>, wherein Component B has a neutralized acid group on a surface thereof,
<5> the relief printing plate precursor for laser engraving as described in <4>, wherein the amount of the neutralized acid group is equal to or greater than 0.15 meq/g (more preferably equal to or greater than 0.3 meq/g, and even more preferably equal to or greater than 0.35 meq/g; and preferably equal to or less than 1.5 meq/g, more preferably equal to or less than 1.2 meq/g, and even more preferably equal to or less than 0.9 meq/g),
<6> the relief printing plate precursor for laser engraving as described in any one of <1> to <5>, wherein Component A is selected from a group consisting of a vinyl-based polymer, a polyamide resin, a polyurethane resin, a polyurea resin, and a polymer having a monomer unit derived from a conjugated diene hydrocarbon,
<7> the relief printing plate precursor for laser engraving as described in any one of <1> to <6>, wherein Component A is a thermoplastic elastomer or a plastomer,
<8> the relief printing plate precursor for laser engraving as described in any one of <1> to <7>, wherein the resin composition for laser engraving further comprises an ethylenically unsaturated compound as Component C,
<9> the relief printing plate precursor for laser engraving as described in any one of <1> to <8>, wherein the resin composition for laser engraving further comprises a polymerization initiator as Component D,
<10> a process for producing the relief printing plate precursor for laser engraving as described in any one of <1> to <9>, which comprises a layer formation step of forming a relief-forming layer from the resin composition for laser engraving, and a crosslinking step of crosslinking the relief-forming layer by means of heat to thus obtain a relief printing plate precursor having a crosslinked relief-forming layer,
<11> a relief printing plate precursor for laser engraving obtained by the process as described in <10>,
<12> a process for making a relief printing plate, which comprises an engraving step of laser-engraving the relief printing plate precursor as described in any one of <1> to <9>,
<13> a relief printing plate, comprising a relief layer made by the process for making a relief printing plate as described in <12>.

According to the present invention, a relief printing plate precursor for laser engraving that is excellent in rinsing properties and engraving sensitivity and can give a sharp engraved shape, and a process for producing the same are provided. In addition, according to the present invention, a resin composition for laser engraving that is appropriately used in such a printing plate precursor is provided. Moreover, according to the present invention, a relief printing plate obtained from the printing plate precursor, and a process for making the same are provided.

The relief printing plate precursor for laser engraving of the present invention has a relief-forming layer formed of the resin composition for laser engraving or a crosslinked relief-forming layer obtained by crosslinking the relief-forming layer formed of the resin composition for laser engraving, in which the resin composition for laser engraving comprises a binder polymer as Component A, and carbon black of which pH is higher than 6 and the average particle size when being dispersed into water is equal to or less than 500 nm as Component B. Hereinafter, the resin composition for laser engraving including Component A and Component B, used in the present invention is also referred to as the resin composition for laser engraving of the present invention.

In the present invention, the description of "a lower limit to an upper limit" representing a numerical range means "equal to or greater than a lower limit to equal to or less than an upper limit", and "an upper limit to a lower limit" means "equal to or less than an upper limit to equal to or greater than a lower limit". That is, the numerical range includes an upper limit and a lower limit. In addition, "parts by mass", "mass %", and "% by mass" have the same meanings as "parts by weight", "wt %" and "% by weight", respectively.

Moreover, in the present invention, "(meth)acrylate" is a generic term for acrylate and methacrylate, and "(meth) acrylic" is a generic term for acrylic and methacrylic. This is the same with regard to "(meth)acryloyloxy".

In the present invention, combinations of preferable embodiments described below are more preferable.

In a case of using the resin composition for laser engraving as described in JP-A-2010-42657, there are problems in that engraving sensitivity and rinsing properties are not sufficient, and a sharp engraved shape cannot be obtained.

As a result of thorough examination, the present inventor found that by using Component B which is a characteristic component of the present invention in combination with Component A, a relief printing plate precursor for laser engraving that is excellent in rinsing properties for engraving residue and engraving sensitivity, and further, can give a sharp engraved shape can be obtained.

As a result of thorough examination, the present inventor found that in carbon black used in the conventional techniques, aggregation of carbon black occurs in film formation step, and thus, engraving sensitivity is reduced. Though the detailed mechanism thereof is unclear, it was found that by using specific carbon black which is Component B, the aggregation of carbon black in film formation step is suppressed, and as a result, the reduction of engraving sensitivity is suppressed.

It is assumed that due to a dispersibility-imparting group which Component B used in the present invention has on a surface thereof, engraving residue becomes finer at the time of rinsing, and thus, rinsing properties are improved.

Furthermore, it is assumed that the aggregation of carbon black in film formation step is suppressed, and as a result, film uniformity is improved, and a sharp engraved shape is obtained.

In the present specification, regarding the description of the relief printing plate precursor and the relief printing plate, a layer which comprises Components A and B, has a flat surface as an image-forming layer subjected to laser engraving, and is not crosslinked is referred to as a relief-forming layer, a layer obtained by crosslinking the relief-forming layer is referred to as a crosslinked relief-forming layer, and a layer in which asperities are formed on the surface by laser engraving is referred to as a relief layer. The relief-forming layer is not necessarily a crosslinkable layer, but it is preferable that the relief-forming layer be a crosslinkable layer.

Hereinafter, constituents of the resin composition for laser engraving of the present invention will be described.

### (Resin composition for laser engraving)

The resin composition for laser engraving of the present invention (hereinafter, also simply referred to as "resin composition") comprises a binder polymer as Component A, and carbon black of which pH is higher than 6 and the average particle size when being dispersed into water is equal to or less than 500 nm as Component B.

### Component A: Binder polymer

The resin composition for laser engraving of the present invention comprises a binder polymer as Component A. The binder polymer can be appropriately selected and used as long as it is a resin component having a weight average molecular weight of 5,000 or greater. The weight average molecular weight of Component A is more preferably at least 7,000, and even more preferably at least10,000. The upper limit of the weight average molecular weight is not particularly limited, and from the viewpoint of ease of processing into a relief-forming layer, it is preferably 2,000,000 or less, more preferably 1,500,000 or less, and yet more preferably 1,000,000 or less.

The weight average molecular weight of Component A is measured by gel permeation chromatography (GPC). GPC is performed using the HLC-8220 GPC (made by Tosoh Corporation), using three columns of TSKgeL Super HZM-H, TSKgeL Super HZ4000, and TSKgeL Super HZ2000 (made by Tosoh Corporation, 4.6 mm ID×15 cm), and using an eluent of THF (tetrahydrofuran). Further, as for the conditions, the sample density is 0.35 mass %, the flow rate is 0.35 ml/min., the sample injection amount is 10 µl, and the measurement temperature is 40°C., and GPC is performed using an IR detector.

Further, a calibration curve is created from eight samples manufactured by Tosoh Corporation: "standard sample TSK standard, polystyrene", "F-40", "F-20", "F-4", "F-1", "A-5000", "A-2500", "A-1000", and "n-propyl benzene".

Component A is preferably a thermoplastic elastomer or a plastomer.

The term 'plastomer' as used in the present invention means, as described in 'Shinpan Kobunshi Jiten (Newly-published Polymer Encyclopedia) ' edited by the Society of Polymer Science, Japan (published in 1988 by Asakura Publishing Co., Ltd., Japan), a macromolecule which has a property of easily undergoing fluid deformation by heating and being capable of solidifying into a deformed shape by cooling. The term 'plastomer' is a term opposed to the term 'elastomer' (a polymer having a property of, when an external force is added, instantaneously deforming in accordance with the external force, and when the external force is removed, being restored to the original shape in a short time), and the plastomer does not exhibit the same elastic deformation as that exhibited by an elastomer, and easily undergoes plastic deformation.

In the present invention, a plastomer means a polymer which, when the original size is designated as 100%, can be deformed up to 200% of the original size by a small external force at room temperature (20°C), and even if the external force is removed, does not return to 130% or less of the original size. More particularly, the plastomer means a polymer with which, based on the tensile permanent strain test of JIS K 6262-1997, an No. 4 dumbbell specimen based on JIS K 6251-1993 can be extended to 2 times the gauge length before pulling in a tensile test at 20°C, and the tensile permanent strain measured after extending the specimen to 2 times the gauge length before pulling, subsequently maintaining the specimen for 60 minutes, removing the external tensile force, and maintaining the specimen for 5 minutes, is 30% or greater. In the present invention, the test is compliant with the tensile permanent strain test of JIS K 6262-1997 except that the specimen is replaced to the No. 4 dumbbell specimen based on JIS K 6251-1993, the retention time is changed to 60 minutes, and the temperature of test chamber is changed to 20°C.

Meanwhile, in the case of a polymer that cannot be subjected to the measurement described above, a polymer which is deformed even if an external force is not applied and does not return to the original shape, or a polymer which is broken by the small external force at the tensile test corresponds to a plastomer.

Furthermore, the plastomer has a glass transition temperature (Tg) of less than 20°C. If the plastomer is a polymer having at least two Tgs, all Tgs are less than 20°C.

An elastomer means a polymer which can be extended to 2 times the gauge length before pulling, and a tensile permanent strain measured after removing the external force and maintaining for 5 minutes is less than 30%.

Component A, which is not particularly limited, may be appropriately selected from known polymers, and among these, a thermoplastic elastomer or a plastomer is preferable. In addition, it is preferable that a polymer selected from the group consisting of a vinyl-based polymer, a polyamide resin, a polyurethane resin, a polyurea resin, and a polymer having a monomer unit derived from a conjugated diene hydrocarbon be appropriately selected and used.

Hereinafter, as Component A preferably used in the present invention, Component A-1: a polymer having an ethylenically unsaturated group in a molecule, Component A-2: a polyurethane resin, Component A-3: a thermoplastic elastomer, Component A-4: a vinyl-based polymer, Component A-5: a polymer having a hydroxy group in a molecule, and Component A-6: a polyurea resin are exemplified and described. In the following description, Components A-1 to A-6 cannot be clearly distinguished from each other, and thus some polymers can be overlapped. For example, a styrene-butadiene-styrene block copolymer is Component A-1-2: a polymer having a monomer unit derived from a conjugated diene hydrocarbon which is Component A-1, and also corresponds to Component A-3-1: a styrene-based thermoplastic elastomer, which is Component A-3.

### Component A-1: Polymer having an ethylenically unsaturated group in a molecule

As Component A, Component A-1: a polymer having an ethylenically unsaturated group in a molecule can be preferably used. As Component A-1, Component A-1-1: a polymer having a (meth)acryloyloxy group in a molecule, and Component A-1-2: a polymer having a monomer unit derived from a conjugated diene hydrocarbon can be exemplified. Component A-1 is preferably a thermoplastic elastomer or a plastomer.

### ComponentA-1-1: polymer having (meth)acryloyloxy group in molecule

Component A-1-1 is a polymer having a (meth)acryloyloxy group in the molecule. Component A-1-1 may have a (meth)acryloyloxy group at any position in the molecule of Component A-1-1 but preferably has one at both molecular termini, and when Component A-1-1 is a straight-chain polymer it more preferably has one at both termini of a main chain. It is surmised that due to both termini of a main chain having a (meth)acryloyloxy group rather than a side chain having a (meth)acryloyloxy group, the flexibility of a crosslinked relief-forming layer and a relief layer (hereinafter, a crosslinked relief-forming layer and a relief layer are also collectively called a relief film) further improves, and ink transfer properties become better. In the present invention, the 'main chain' means the relatively longest bonded chain, among chains, of a polymer compound molecule constituting a polymer, and the 'side chain' means a carbon chain branching from the main chain.

The number of (meth)acryloyloxy groups of Component A-1-1 is preferably 1 to 10 per molecule, more preferably 2 to 6, yet more preferably 2 to 4, and particularly preferably 2.

Component A-1-1 being a straight chain means it being a polymer not intentionally having a branched structure, a crosslinked structure, or a net structure introduced thereinto and comprising substantially none of these structures.

Furthermore, identification of a structure with regard to whether or not Component A-1-1 is a straight chain, etc. may be carried out by combining various analytical methods such as NMR, pyrolysis GS-MS, GPC, HPLC, and dynamic and static light scattering methods.

Component A-1-1 preferably has a urethane bond in the molecule. In accordance with the use of a urethane bond-containing Component A-1-1, the film strength of a relief film that is obtained increases outstandingly and the printing durability improves. Preferred examples include a urethane (meth)acrylate polymer in which a (meth)acryloyloxy group has been introduced into a polyurethane resin (hereinafter, also called a urethane acrylate, etc.). Furthermore, it is preferable for Component A-1-1 to be a straight-chain polymer and to have a (meth)acryloyloxy group at both termini, that is, both termini of the main chain.

A method for introducing a (meth)acryloyloxy group into Component A-1-1 may be carried out in accordance with a known method for introducing a functional group into a polymer. For example, there can be cited a method in which a starting material having a (meth)acryloyloxy group is used as a polymerizable compound that is a starting material for forming a polymer. Alternatively, there can be cited a method in which a polymer having a reactive group at a main chain terminal or in a side chain undergoes a polymer reaction with a compound having a (meth)acryloyloxy group and a functional group that reacts with the reactive group.

Examples of the former include a method in which a urethane acrylate is formed by a polyaddition reaction between a diisocyanate compound and a diol compound having a (meth)acryloyloxy group.

Examples of the latter include a method in which a polymer having a (meth)acryloyloxy group in the molecule is formed by reacting a reactive group such as a hydroxy group or an amino group in the main chain or a side chain of an acrylate resin, polyester, polyurethane, polycarbonate, etc. with (meth)acrylic acid, a (meth)acrylic acid halide, etc.

In the present invention, as Component A-1-1, a polycarbonate resin having a (meth)acryloyloxy group, an acrylic resin having a (meth)acryloyloxy group, a polyester resin having a (meth)acryloyloxy group, or a polyurethane resin having a (meth)acryloyloxy group can be preferably exemplified.

In the present invention, as preferred examples of an oligomer or polymer that is a starting material for a Component A-1-1 into which a (meth)acryloyloxy group is introduced, there can be cited Compound a-i: a polycarbonate polyol, Compound a-ii: an acrylic resin, Compound a-iii: a polyester resin having a hydroxy group at a molecular terminal, and Compound a-iv: a polyurethane resin having a hydroxy group or an isocyanato group at a molecular terminal.

By reacting a reactive group such as a hydroxy group or an amino group of the oligomers or polymers of Compound a-i to Compound a-iv above with (meth)acrylic acid, a compound having a (meth)acryloyloxy group and a functional group that can react with the reactive group, or a (meth)acrylic acid halide, there may be obtained, as Component A, i: a polymer having a polycarbonate polyol as the main chain and having a (meth)acryloyloxy group in the molecule (hereinafter, also called a polycarbonate (meth)acrylate, etc.), ii: a polymer having an acrylic resin as the main chain and having a (meth)acryloyloxy group in the molecule (hereinafter, also called an acrylic resin (meth)acrylate, etc.), iii: a polymer having a polyester as the main chain and having a (meth)acryloyloxy group in the molecule (hereinafter, also called a polyester (meth)acrylate, etc.), and iv: a polymer having a polyurethane as the main chain and having a (meth)acryloyloxy group in the molecule (hereinafter, also called a urethane (meth)acrylate, etc.).

Compound a-i to Compound a-iv are each explained in detail below.

### Compound a-i: polycarbonate polyol

In the present invention, Compound a-i: a polycarbonate polyol may be used as the main chain of Component A-1-1, and among them a polycarbonate diol is preferable.

Examples of the polycarbonate polyol include those obtained by a reaction between a polyol component and a carbonate compound such as a dialkyl carbonate, an alkylene carbonate, or a diaryl carbonate.

Examples of the polyol component forming the polycarbonate polyol include those usually used in the production of a polycarbonate polyol, for example, an aliphatic diol having 2 to 15 carbons such as ethylene glycol, diethylene glycol, triethylene glycol, propylene glycol, 1,3-propanediol, 2-methyl-1,3-propanediol, 2,2-diethyl-1,3-propanediol, 1,3-butanediol, 1,4-butanediol, 2-methyl-1,4-butanediol, neopentyl glycol, 1,5-pentanediol, 3-methyl-1,5-pentanediol, 1,6-hexanediol, 1,7-heptanediol, 1,8-octanediol, 2-methyl-1,8-octanediol, 2,7-dimethyl-1,8-octanediol, 1,9-nonanediol, 2-methyl-1,9-nonanediol, 2,8-dimethyl-1,9-nonanediol, or 1,10-decanediol; an alicyclic diol such as 1,4-cyclohexanediol, cyclohexanedimethanol, or cyclooctanedimethanol; an aromatic diol such as 1,4-bis(β-hydroxyethoxy)benzene; and a polyhydric alcohol having three or more hydroxy groups per molecule such as trimethylolpropane, trimethylolethane, glycerol, 1,2,6-hexanetriol, pentaerythritol, or diglycerol. When producing a polycarbonate polyol, with regard to these polyol components, one type thereof may be used or two or more types thereof may be used in combination.

Among them, when producing the polycarbonate polyol, it is preferable to use as the polyol component an aliphatic diol having 5 to 12 carbons and having a methyl group as a side chain, such as 2-Methyl-1,4-butanediol, 3-methyl-1,5-pentanediol, 2-methyl-1,8-octanediol, 2,7-dimethyl-1,8-octanediol, 2-methyl-1,9-nonanediol, or 2,8-dimethyl-1,9-nonanediol. In particular, it is preferable to use such an aliphatic diol having 5 to 12 carbons and having a methyl group as a side chain at a proportion of at least 30 mole% of the total polyol components used in the production of the polyester polyol, and more preferably at least 50 mole% of the total polyol components.

Examples of the dialkyl carbonate include dimethyl carbonate and diethyl carbonate, examples of the alkylene carbonate include ethylene carbonate, and examples of the diaryl carbonate include diphenyl carbonate.

As the polycarbonate polyol, a polyester polycarbonate polyol can be used, and examples thereof include a polymer obtainable by allowing a polyol component, a polycarboxylic acid component and a carbonate compound to simultaneously react; a polymer obtainable by allowing a polyester polyol and a polycarbonate polyol that have been synthesized in advance to react with a carbonate compound; and a polymer obtainable by allowing a polyester polyol and a polycarbonate polyol that have been synthesized in advance to react with a polyol component and a polycarboxylic acid component.

The polycarbonate polyol is preferably a polycarbonate diol represented by Formula 1 below.

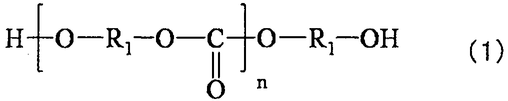

In Formula 1, the R₁s independently denote a straight-chain, branched, and/or cyclic hydrocarbon group having 3 to 50 carbons, which may contain an oxygen atom, etc. (at least one type of atom selected from the group consisting of nitrogen, sulfur, and oxygen) in a carbon skeleton, and R₁ may be a single component or comprise a plurality of components. n is preferably an integer of 1 to 500.

The 'hydrocarbon group' in R₁ is a saturated or unsaturated hydrocarbon group, but is preferably a saturated hydrocarbon group.

The 'carbon skeleton' in R₁ means a structural part having 3 to 50 carbons forming the hydrocarbon group, and the term 'which may contain an oxygen atom, etc. in a carbon skeleton' means a structure in which an oxygen atom, etc. is inserted into a carbon-carbon bond of a main chain or a side chain. Furthermore, it may be a substituent having an oxygen atom, etc., bonded to a carbon atom in a main chain or a side chain.

Examples of the straight-chain hydrocarbon group in R₁ include a hydrocarbon group derived from a straight-chain aliphatic diol having 3 to 50 carbons such as 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, 1,16-hexadecanediol, or 1,20-eicosanediol.

Examples of the branched hydrocarbon group in R₁ include a hydrocarbon group derived from a branched aliphatic diol having 3 to 30 carbons such as 2-methyl-1,3-propanediol, 2-ethyl-1,3-propanediol, neopentyl glycol, 2,2-diethyl-1,3-propanediol, 2-methyl-2-propyl-1,3-propanediol, 2-butyl-2-ethyl-1,3-propanediol, 2,2-dibutyl-1,3-propanediol, 1,2-butanediol, 2-ethyl-1,4-butanediol, 2-isopropyl-1,4-butanediol, 2,3-dimethyl-1,4-butanediol, 2,3-diethyl-1,4-butanediol, 3,3-dimethyl-1,2-butanediol, pinacol, 1,2-pentanediol, 1,3-pentanediol, 2,3-pentanediol, 2-methyl-2,4-pentanediol, 3-methyl-1,5-pentanediol, 2-ethyl-1,5-pentanediol, 3-ethyl-1,5-pentanediol, 2-isopropyl-1,5-pentanediol, 3-isopropyl-1,5-pentanediol, 2,4-dimethyl-1,5-pentanediol, 2,4-diethyl-1,5-pentanediol, 2,3-dimethyl-1,5-pentanediol, 2,2,3-trimethyl-1,3-pentanediol, 1,2-hexanediol, 1,3-hexanediol, 1,4-hexanediol, 2,5-hexanediol, 2-ethyl-1,6-hexanediol, 2-ethyl-1,3-hexanediol, 2-isopropyl-1,6-hexanediol, 2,4-diethyl-1,6-hexanediol, 2,5-dimethyl-2,5-hexanediol, 2-methyl-1,8-octanediol, 2-ethyl-1,8-octanediol, 2,6-dimethyl-1,8-octanediol, 1,2-decanediol, or 8,13-dimethyl-1,20-eicosanediol.

Examples of the cyclic hydrocarbon group in R₁ include a hydrocarbon group derived from a cyclic aliphatic diol or an aromatic diol having 3 to 30 carbons such as 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, *m*-xylene-α,α'-diol, *p*-xylene-α,α'-diol, 2,2-bis(4-hydroxycyclohexyl)propane, 2,2-bis(4-hydroxyphenyl)propane, or dimer diol.

A hydrocarbon group derived from a straight-chain aliphatic diol having 3 to 50 carbons is explained as an example: in the present invention, the 'hydrocarbon group derived from a straight-chain aliphatic diol having 3 to 50 carbons' means a group which is a partial structure, excluding the diol hydroxy groups, of the straight-chain aliphatic diol having 3 to 50 carbons.

Examples of the hydrocarbon group containing at least one type of atom selected from the group consisting of nitrogen, sulfur, and oxygen in R₁ include a hydrocarbon group derived from diethylene glycol, triethylene glycol, tetraethylene glycol, glycerol, 1,2,6-hexanetriol, trimethylolethane, trimethylolpropane, pentaerythritol, dihydroxyacetone, 1,4:3,6-dianhydroglucitol, diethanolamine, *N*-methyldiethanolamine, dihydroxyethylacetamide, 2,2'-dithiodiethanol, or 2,5-dihydroxy-1,4-dithiane, and a group represented by Formula 2 below.

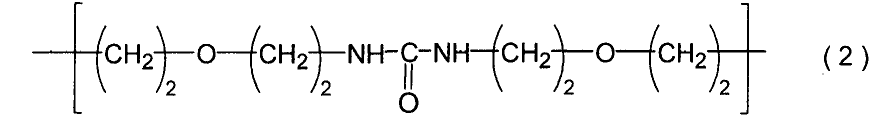

A polycarbonate diol may be produced by for example a conventionally known method as described in JP-B-5-29648 (JP-B denotes a Japanese examined patent application publication), and specifically it may be produced by an ester exchange reaction between a diol and a carbonic acid ester.

In Formula (1) above, from the viewpoint of solvent resistance, R₁ preferably contains at least one ether bond, and from the viewpoint of solvent resistance and durability, R₁ more preferably contains a group derived from diethylene glycol (group represented by -(CH₂)₂-O-(CH₂)₂-), and R₁ is yet more preferably a group derived from diethylene glycol.

The weight-average molecular weight of these polycarbonate polyols is preferably in the range of 3,000 to 500,000, more preferably in the range of 10,000 to 300,000, and yet more preferably in the range of 15,000 to 150,000.

### Compound a-ii: acrylic resin

In the present invention, Compound a-ii: an acrylic resin may be used as the main chain of Component A-1-1.

The acrylic resin is not particularly limited as long as it is an acrylic resin that is obtained by the use of a known (meth)acrylic monomer, but it preferably has -OH, -SH, -NH-, -NH₂, -COOH, etc. in the molecule as a reactive group.

Among them, -OH, -NH-, or -NH₂ is preferable, and -OH (a hydroxy group) is particularly preferable.

Examples of the (meth)acrylic monomers used for synthesizing an acrylic resin having a hydroxy group include preferably (meth)acrylic acid esters, crotonic acid esters and (meth)acrylamides having a hydroxy group in the molecule. Specific examples of such monomers include 2-hydroxyethyl (meth)acrylate, 2-hydroxypropyl (meth)acrylate, 4-hydroxybutyl (meth)acrylate etc.

An acrylic resin having a hydroxyl group on a terminal may comprise a homopolymer or a copolymer of an acrylic monomer having a hydroxy group, and is preferably a copolymer of an acrylic monomer having a hydroxyl group and an acrylic monomer other than the acrylic monomer having a hydroxyl group.

Examples of the (meth)acrylic monomer other than the acrylic monomer having a hydroxy group, which is copolymerizable with the acrylic monomer having a hydroxy group, include a (meth)acrylic ester, and specific examples of the (meth)acrylic ester include methyl (meth)acrylate, ethyl (meth)acrylate, *n*-propyl (meth)acrylate, isopropyl (meth)acrylate, *n*-butyl (meth)acrylate, isobutyl (meth)acrylate, *tert*-butyl (meth)acrylate, *n*-hexyl (meth)acrylate, 2-ethylhexyl (meth)acrylate, lauryl (meth)acrylate, acetoxyethyl (meth)acrylate, phenyl (meth)acrylate, 2-methoxyethyl (meth)acrylate, 2-ethoxyethyl (meth)acrylate, 2-(2-methoxyethoxy)ethyl (meth)acrylate, cyclohexyl (meth)acrylate, *t*-butylcyclohexyl (meth)acrylate, benzyl (meth)acrylate, diethylene glycol monomethyl ether (meth)acrylate, diethylene glycol monoethyl ether (meth)acrylate, diethylene glycol monophenyl ether (meth)acrylate, triethylene glycol monomethyl ether (meth)acrylate, triethylene glycol monoethyl ether (meth)acrylate, dipropylene glycol monomethyl ether (meth)acrylate, polyethylene glycol monomethyl ether (meth)acrylate, polypropylene glycol monomethyl ether (meth)acrylate, the monomethyl ether (meth)acrylate of a copolymer of ethylene glycol and propylene glycol, *N,N*-dimethylaminoethyl (meth)acrylate, *N,N*-diethylaminoethyl (meth)acrylate, and *N,N*-dimethylaminopropyl (meth)acrylate.

In the present invention, the acrylic resin may be a homopolymer of a hydroxy group-containing (meth)acrylic monomer or a copolymer of a plurality of different monomers. In the case of a copolymer, the ratio of constituent units may be selected freely. Furthermore, as the acrylic resin, a modified acrylic resin formed from a urethane group- or urea group-containing acrylic monomer may also be preferably used.

Among them, from the viewpoint of ink transfer properties, an alkyl (meth)acrylate such as lauryl (meth)acrylate or 2-ethylhexyl (meth)acrylate, a (meth)acrylate having an ether bond in the main chain such as polyethylene glycol monomethyl ether (meth)acrylate or polypropylene glycol monomethyl ether (meth)acrylate, and a (meth)acrylate having an aliphatic cyclic structure such as *t*-butylcyclohexyl (meth)acrylate are particularly preferable.

### Compound a-iii: polyester resin having hydroxy group at molecular terminal

In the present invention, Compound a-iii: a polyester resin having a hydroxy group at a molecular terminal may be used as the main chain of Component A-1-1. Compound a-iii is preferably a polyester resin having a hydroxy group at a main chain terminal, and more preferably one having a hydroxy group at both main chain termini.

It is preferable for Compound a-iii to be a resin formed by an esterification reaction or an ester exchange reaction from at least one type of polybasic acid component and at least one type of polyhydric alcohol component.

Specific examples of the polybasic acid component include dibasic acids such as phthalic acid, isophthalic acid, terephthalic acid, tetrahydrophthalic acid, hexahydrophthalic acid, succinic acid, fumaric acid, adipic acid, sebacic acid, and maleic acid; trivlaent or higher-valent polybasic acids such as trimellitic acid, methylcyclohexene tricarboxylic acid, and pyromellitic acid; and acid anhydrides thereof, for example, phthalic anhydride, tetrahydrophthalic anhydride, hexahydrophthalic anhydride, maleic anhydride, trimellitic anhydride, and pyromellitic anhydride.

As the polybasic acid component, one or more dibasic acids selected from the dibasic acids described above, lower alkyl ester compounds of these acids, and acid anhydrides are mainly used. Furthermore, if necessary, a monobasic acid such as benzoic acid, crotonic acid or *p*-*t*-butylbenzoic acid; a trivalent or higher-valont polybasic acid such as trimellitic anhydride, methylcyclohexene tricarboxylic acid or pyromellitic anhydride; or the like can be further used in combination.

The polybasic acid component according to the present invention preferably includes at least adipic acid, from the viewpoint of ink transfer properties.

Specific examples of the polyhydric alcohol component include divalent alcohols such as ethylene glycol, diethylene glycol, propylene glycol, dipropylene glycol, 1,4-butanediol, neopentyl glycol, 1,5-pentanediol, 3-methylpentanediol, 1,4-hexanediol, and 1,6-hexanediol; and trivalent or higher-valent polyhydric alcohols such as glycerol, trimethylolethane, trimethylolpropane, and pentaerythritol.

As the polyhydric alcohol component, the divalent alcohols described above are mainly used, and if necessary, trivalent or higher-valent polyhydric alcohols such as glycerol, trimethylolethane, trimethylolpropane, and pentaerythritol can be further used in combination. These polyhydric alcohols can be used individually, or as mixtures of two or more kinds.

The polyhydric alcohol component according to the present invention preferably includes at least 3-methylpentanediol, from the viewpoint of storage stability.

The esterification reaction or ester exchange reaction of the polybasic acid component and the polyhydric alcohol component can be carried out by using a usually used method without particular limitations.

Examples of commercially available polyester (meth)acrylates include EBECRYL 524, EBECRYL 884, and EBECRYL 885 (all manufactured by DAICEL-ALLNEX LTD.).

### Compound a-iv: polyurethane resin having hydroxy group or isocyanato group at molecular terminal

In the present invention, as the main chain of Component A-1-1, Compound a-iv: a polyurethane resin having a hydroxy group or an isocyanato group at a molecular terminal may be used. Compound a-iv is preferably a polyurethane resin having a hydroxy group or an isocyanato group at a main chain terminal, and more preferably one having hydroxy groups or isocyanato groups at both main chain termini.

The aforementioned iv: a polymer including polyurethane as a main chain and having a (meth)acryloyloxy group in a molecule can be synthesized by iv-1: a method in which first, polyurethane having an isocyanato group on a terminal is formed with an arbitrary molecular weight by reacting polyol and polyisocyanate, and then, the polyurethane is reacted with a compound having an active hydrogen and a (meth)acryloyloxy group in a molecule, or iv-2: a method in which first, polyurethane having a hydroxyl group on a terminal is formed with an arbitrary molecular weight by reacting polyol and polyisocyanate, and then, the polyurethane is reacted with a compound having an isocyanate group and a (meth)acryloyloxy group in a molecule.

Component a-iv can be produced by reacting at least one polyisocyanate and at least one polyhydric alcohol.

Examples of polyols include a polyether polyol, a polyester polyol, and a polyether polyester copolymer polyol.

One type thereof may be used on its own or two or more types may be used in combination.

Examples of the polyether polyol include polyoxyethylene glycol, polyoxypropylene glycol, polyoxytetramethylene glycol, polyoxy-1,2-butylene glycol, a polyoxyethylene/polyoxypropylene random copolymer glycol, a polyoxyethylene/polyoxypropylene block copolymer glycol, a polyoxyethylene/polyoxytetramethylene random copolymer glycol, and a polyoxyethylene/polyoxytetramethylene block copolymer glycol. One type thereof may be used on its own or two or more types may be used in combination.

Examples of the polyester polyol include a condensation-based polyester polyol, that is, a diol having a repeating polyester segment obtained by a polycondensation reaction between a glycol compound and a dicarboxylic acid compound. Examples of such a diol include an adipic acid ester-based diol such as poly(ethylene glycol adipate)diol, poly(diethylene glycol adipate)diol, poly(propylene glycol adipate)diol, poly(1,4-butane glycol adipate)diol, poly(1,6-hexane glycol adipate)diol, poly(2-methylpropane glycol adipate)diol, poly(3-methyl-1,5-pentane glycol adipate)diol, poly(neopentyl glycol adipate)diol, poly(1,9-nonane glycol adipate)diol, poly(2-methyloctane glycol adipate)diol, polycaprolactonediol, and poly(β-methyl-γ-valerolactone)diol. Examples of the dicarboxylic acid compound forming the polyester segment include, in addition to adipic acid, succinic acid, glutaric acid, azelaic acid, sebacic acid, maleic acid, terephthalic acid, isophthalic acid, and 1,5-naphthalenedicarboxylic acid.

As shown in the examples above, the polyester segment is generally formed by a polycondensation reaction between a single type of diol compound and a single type of dicarboxylic acid compound. However, it is also possible to form a polyester segment by polycondensation using a plurality of types of either one or both compounds and mixing at any proportions. As the polyester polyol, in addition to the condensation-type polyester polyol, a lactone-based polyester polyol or a polyester polycarbonate polyol may be used, and one type thereof may be used on its own, or two or more types may be used in combination.

Examples of the polycarbonate polyol include a polymer obtainable by allowing a polyol component to react with a carbonate compound such as a dialkyl carbonate, an alkylene carbonate, or a diaryl carbonate.

As the polyol component composed of the polycarbonate polyol, compounds that are generally used in the production of a polycarbonate polyol can be used, and examples thereof include aliphatic diols having 2 to 15 carbon atoms, such as ethylene glycol, diethylene glycol, triethylene glycol, propylene glycol, 1,3-propanediol, 2-methyl-1,3-propanediol, 2,2-diethyl-1,3-propanediol, 1,3-butanediol, 1,4-butanediol, 2-methyl-1,4-butanediol, neopentyl glycol, 1,5-pentanediol, 3-methyl-1,5-pentanediol, 1,6-hexanediol, 1,7-heptanediol, 1,8-octanediol, 2-methyl-1,8-octanediol, 2,7-dimethyl-1,8-octanediol, 1,9-nonanediol, 2-methyl-1,9-nonanediol, 2,8-dimethyl-1,9-nonanediol, and 1,10-decanediol; alicyclic diols such as 1,4-cyclohexanediol, cyclohexanedimethanol, and cyclooctanedimethanol; aromatic diols such as 1,4-bis(β-hydroxyethoxy)benzene; and polyhydric alcohols having three or more hydroxyl groups per molecule, such as trimethylolpropane, trimethylolethane, glycerin, 1,2,6-hexanetriol, pentaerythritol, and diglycerin. In the production of a polycarbonate polyol, such a polyol component may be used alone, or two or more kinds may be used in combination.

Among these, for the production of a polycarbonate polyol, it is preferable to use an aliphatic diol having 5 to 12 carbon atoms and having a methyl group as a side chain, such as 2-methyl-1,4-butanediol, 3-methyl-1,5-pentanediol, 2-methyl-1,8-octanediol, 2,7-dimethyl-1,8-octanediol, 2-methyl-1,9-nonanediol, or 2,8-dimethyl-1,9-nonanediol, as the polyol component. Particularly, it is preferable to use such an aliphatic diol having 5 to 12 carbon atoms and having a methyl group as a side chain at a proportion of 30 mol% or more of the total amount of the polyol components used in the production of the polyester polyol, and more preferably at a proportion of 50 mol% or more of the total amount of polyol components.

Furthermore, examples of the dialkyl carbonate include dimethyl carbonate and diethyl carbonate, and examples of the alkylene carbonate include ethylene carbonate. Examples of the diaryl carbonate include diphenyl carbonate.

Examples of the polyester polycarbonate polyol described above include a polymer obtainable by allowing a polyol component, a polycarboxylic acid component and a carbonate compound to simultaneously react; a polymer obtainable by allowing a polyester polyol and a polycarbonate polyol that have been synthesized in advance to react with a carbonate compound; and a polymer obtainable by allowing a polyester polyol and a polycarbonate polyol that have been synthesized in advance to react with a polyol component and a polycarboxylic acid component.

The polycarbonate polyol is preferably a polycarbonate diol represented by Formula 1-1 below.

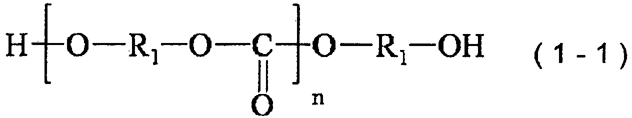

In Formula 1-1, the R₁s independently denote a straight-chain, branched, and/or cyclic hydrocarbon group having 2 to 50 carbons, which may contain an oxygen atom, etc. (at least one type of atom selected from the group consisting of nitrogen, sulfur, and oxygen) in a carbon skeleton, and R₁ may be a single component or comprise a plurality of components. n is preferably an integer of 1 to 500.

The 'hydrocarbon group' in R₁ is a saturated or unsaturated hydrocarbon group, but is preferably a saturated hydrocarbon group.

The 'carbon skeleton' in R₁ means a structural part having 2 to 50 carbons forming the hydrocarbon group, and the term 'which may contain an oxygen atom, etc. in a carbon skeleton' means a structure in which an oxygen atom, etc. is inserted into a carbon-carbon bond of a main chain or a side chain. Furthermore, it may be a substituent having an oxygen atom, etc., bonded to a carbon atom in a main chain or a side chain.

Examples of the straight-chain hydrocarbon group in R₁ include a hydrocarbon group derived from a straight-chain aliphatic diol having 2 to 50 carbons such as ethanol, 1,3-propariediol, 1,4-butanediol, 1,5-pentanediol, 1,6-hexanediol, 1,7-heptanediol, 1,8-octanediol, 1,9-nonanediol, 1,10-decanediol, 1,12-dodecanediol, 1,16-hexadecanediol, or 1,20-eicosanediol.

Examples of the branched hydrocarbon group in R₁ include a hydrocarbon group derived from a branched aliphatic diol having 3 to 30 carbons such as 2-methyl-1,3-propanediol, 2-ethyl-1,3-propanediol, neopentyl glycol, 2,2-diethyl-1,3-propanediol, 2-methyl-2-propyl-1,3-propanediol, 2-butyl-2-ethyl-1,3-propanediol, 2,2-dibutyl-1,3-propanediol, 1,2-butanediol, 2-ethyl-1,4-butanediol, 2-isopropyl-1,4-butanediol, 2,3-dimethyl-1,4-butanediol, 2,3-diethyl-1,4-butanediol, 3,3-dimethyl-1,2-butanediol, pinacol, 1,2-pentanediol, 1,3-pentanediol, 2,3-pentanediol, 2-methyl-2,4-pentanediol, 3-methyl-1,5-pentanediol, 2-ethyl-1,5-pentanediol, 3-ethyl-1,5-peritanediol, 2-isopropyl-1,5-pentanediol, 3-isopropyl-1,5-pentanediol, 2,4-dimethyl-1,5 -pentanediol, 2,4-diethyl-1,5-pentanediol, 2,3-dimethyl-1,5-pentanediol, 2,2,3-trimethyl-1,3-pentanediol, 1,2-hexanediol, 1,3-hexanediol, 1,4-hexanediol, 2,5-hexanediol, 2-ethyl-1,6-hexanediol, 2-ethyl-1,3-hexanediol, 2-isopropyl-1,6-hexanediol, 2,4-diethyl-1,6-hexanediol, 2,5-dimethyl-2,5-hexanediol, 2-methyl-1,8-octanediol, 2-ethyl-1,8-octanediol, 2,6-dimethyl-1,8-octanediol, 1,2-decanediol, or 8,13-dimethyl-1,20-eicosanediol.

Examples of the cyclic hydrocarbon group in R₁ include a hydrocarbon group derived a cyclic aliphatic diol having 3 to 30 carbons such as 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, *m*-xylene-α,α'-diol, *p*-xylene-α,α'-diol, 2,2-bis(4-hydroxycyclohexyl)propane, 2,2-bis(4-hydroxyphenyl)propane, or dimer diol.

A hydrocarbon group derived from a straight-chain aliphatic diol having 2 to 50 carbons is explained as an example: in the present invention, the 'hydrocarbon group derived from a straight-chain aliphatic diol having 2 to 50, carbons' means a group which is a partial structure, excluding the diol hydroxy groups, of the straight-chain aliphatic diol having 2 to 50 carbons.

Examples of the hydrocarbon group containing at least one type of atom selected from the group consisting of nitrogen, sulfur, and oxygen in R₁ include a hydrocarbon group derived from diethylene glycol, triethylene glycol, tetraethylene glycol, glycerol, 1,2,6-hexanetriol, trimethylolethane, trimethylolpropane, pentaerythritol, dihydroxyacetone, 1,4:3,6-dianhydroglucitol, diethanolamine, *N*-methyldiethanolamine, dihydroxyethylacetamide, 2,2'-dithiodiethanol, or 2,5-dihydroxy-1,4-dithiane, and a group represented by Formula 1-2 below.

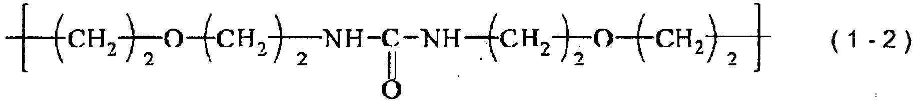

For example, polycarbonate diol can be prepared by known methods as described in JP-B-5-29648, and specifically, polycarbonate diol can be prepared by an ester exchange reaction between diol and carbonic acid ester.

In the above formula 1-1, from the viewpoint of solvent resistance, R₁ preferably contains at least one ether bond, and from the viewpoint of solvent resistance and durability, R₁ is more preferably a group derived from diethylene glycol (a group represented by -(CH₂)₂-O-(CH₂)₂-).

As the above polyether polyester copolymerization polyols, copolymers having a structure in which a repeating unit forming a molecular chain of the above polyether polyol and a repeating unit forming a molecular chain of the above polyester polyol are bonded in block or randomly can be exemplified. One type of polyether polyester copolymerization polyols is used on its own, or two or more types thereof are used in combination.

As the polyisocyanate compound, an aliphatic, aromatic, or alicyclic polyisocyanate may be used, and examples thereof include a diisocyanate compound such as 2,4-tolylene diisocyanate, 2,6-tolylene diisocyanate, 4,4'-diphenylmethane diisocyanate, hexamethylene diisocyanate, isophorone diisocyanate, methylenebis(cyclohexane-1,4-diyl)diisocyanate, m-phenylenebis(1-methylethane-1,1-diyl)diisocyanate, hexamethylene diisocyanate, xylylenediyl diisocyanate, naphthalene-1,5-diyl diisocyanate, 1,6-diisocyanato-2,2,4-trimethylhexane, 3,3'-dimethylbiphenyl-4,4'-diisocyanate, 1,3-phenylene diisocyanate, 1,4-phenylene diisocyanate, cyclohexane-1,3-diyl diisocyanate, cyclohexane-1,4-diyl diisocyanate, dimer acid diisocyanate, cyclohexane-1,3-diylbis(methyl isocyanate), 2-methyl-1,4-phenylene diisocyanate, 4-[(2-isocyanatophenyl)oxy]phenyl isocyanate, 4,4'-oxybis(phenyl isocyanate), naphthalene 1,4-diyl diisocyanate, naphthalene-2,6-diyl diisocyanate, naphthalene-2,7-diyl isocyanate, 1-methylcyclohexane 2,4-diisocyanate, 2,2'-dimethoxybiphenyl-4,4'-diyl diisocyanate, methyl 2,6-diisocyanatohexanoate, 5-methyl-1,3-phenylene diisocyanate, methylenebis(2,1-phenylene)diisocyanate, 4-[(2-isocyanatophenyl)methyl]phenyl isocyanate, dimethyldiisocyanatosilane, 2,4,6-triisopropylbenzene-1,3-diyl diisocyanate, 2,2-dimethylpentane-1,5-diyl diisocyanate, 4-[(2-isocyanatophenyl)thio]phenyl isocyanate, undecamethylene diisocyanate, methylenebis(2-methyl-4,1-phenylene)diisocyanate, adipoyl isocyanate, 4,4'-ethylenebis(1-isocyanatobenzene), 1-(trifluoromethyl)-2,2,2-trifluoroethylidenebis(4,1-phenylene) diisocyanate, tetramethylene diisocyanate, 1,4-phenylenebis(ethylene), diisocyanate, 1,4-phenylenebis(ethylene)diisocyanate, 1-methylethylene diisocyanate, methylene diisocyanate, sulfonylbis(3,1-phenylene)diisocyanate, ethylene diisocyanate, trimethylene diisocyanate, pentamethylene diisocyanate, heptane-1,7-diyl diisocyanate, nonamethylene diisocyanate, or decamethylene diisocyanate.

Furthermore, examples of the triisocyanate compound include a triisocyanate compound such as triphenylmethane triisocyanate, 1-methylbenzene-2,4,6-triisocyanate, naphthalene-1,3,7-triisocyanate, or biphenyl-2,4,4'-triisocyanate.

With regard to these compounds, one type may be used on its own or two or more types may be used in combination.

Examples of the compound having an active hydrogen and a (meth)acryloyloxy group in a molecule include hydroxypropyl (meth)acrylate, hydroxyethyl (meth)acrylate, polypropylene glycol mono(meth)acrylate, polyethylene glycol mono(meth) acrylate, glycerin mono(meth)acrylate, and glycerin di(meth)acrylate.

Examples of the compound having an isocyanate group and a (meth)acryloyloxy group in a molecule include (meth)acryloyloxyethyl isocyanate.

As commercially available urethane (meth)acrylate and the like, SHIKOH (registered trademark) series such as UV-3200, UV-3000B, UV-3700B, UV-3210EA, UV-2000B, and UV-3630 (manufactured by Nippon Synthetic Chemical Industry Co., Ltd.), EBECRYL (registered trademark) 230 and EBECRYL (registered trademark) 9227EA (manufactured by DAICEL-ALLNEX LTD.), and Hi-Coap AU (registered trademark) series such as AU-3040, AU-3050, AU-3090, AU-3110, and AU-3120 (manufactured by Tokushiki Co., Ltd.) can be exemplified.

### Component A-1-2: polymer having a monomer unit derived from a conjugated diene hydrocarbon

The resin composition for laser engraving of the present invention may comprise Component A-1-2: a polymer having a monomer unit derived from a conjugated diene hydrocarbon as Component A.

Component A-1-2 has at least a monomer unit derived from a conjugated diene hydrocarbon.

Examples of Component A-1-2 include a polymer obtained by polymerization of a conjugated diene-based hydrocarbon and a copolymer obtained by polymerization of a conjugated diene-based hydrocarbon and a monoolefin-based unsaturated compound.

Specific examples of the conjugated diene-based hydrocarbon include 1,3-butadiene, isoprene, and chloroprene. These compounds may be used on their own or in a combination of two or more types.

Specific examples of the monoolefin-based unsaturated compound include isobutene, styrene, α-methylstyrene, *o*-methylstyrene, *p*-methylstyrene, (meth)acrylonitrile, vinyl chloride, vinylidene chloride, (meth)acrylamide, vinyl acetate, a (meth)acrylate ester, and (meth)acrylic acid.

The polymer obtained by polymerization of a conjugated diene-based hydrocarbon and the copolymer obtained by polymerization of a conjugated diene-based hydrocarbon and a monoolefin-based unsaturated compound are not particularly limited; specific examples include a butadiene polymer, an isoprene polymer, a chloroprene polymer, a styrene-butadiene copolymer, a styrene-isoprene copolymer, a styrene-chloroprene copolymer, an acrylonitrile-butadiene copolymer, an acrylonitrile-isoprene copolymer, an acrylonitrile-chloroprene copolymer, an acrylate ester-isoprene copolymer, an acrylate ester-chloroprene copolymer, a copolymer of a methacrylate ester and the above conjugated diene, an acrylonitrile-butadiene-styrene copolymer, a styrene-isoprene-styrene block polymer, a styrene-butadiene-styrene block polymer and an isobutene-isoprene copolymer (butyl rubber). These polymers may be emulsion-polymerized or solution-polymerized.

In the present invention, Component A-1-2 may have a partial structure represented by Formula A-1 below.

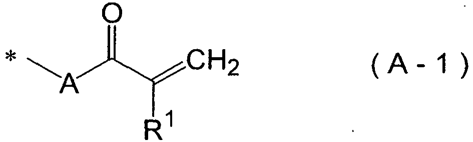

In Formula A-1, R¹ denotes a hydrogen atom or a methyl group, A denotes O or NH, and * denotes a binding position with another chemical structure.

In Formula A-1, A is preferably O.

In Formula A-1, R¹ is preferably a hydrogen atom.

That is, Component A-1-2 may have a (meth)acryloyloxy group or a (meth)acrylamide group in a molecule, more preferably has a (meth)acryloyloxy group, and even more preferably has an acryloyloxy group.

Component A-1-2 may have a substructure represented by Formula A-1 on any of a main chain terminal or a side chain, and preferably has it on a main chain terminal.

From the viewpoint of printing durability, Component A-1-2 preferably has two or more partial structures represented by Formula A-1 in a molecule.

As Component A-1-2 having the partial structure represented by Formula A-1, polyolefin acrylates obtained by reacting an ethylenically unsaturated group-containing compound with a hydroxyl group of a hydroxyl group-containing polyolefin, such as polybutadiene di(meth)acrylate, hydrogenated polybutadiene di(meth)acrylate, polyisoprene di(meth)acrylate, and hydrogenated polyisoprene di(meth)acrylate, can be exemplified (for example, BAC-45 (manufactured by Osaka Organic Chemical Industry Ltd.), and TEA-1000, TE-2000, and TEAI-1000 (manufactured by Nippon Soda Co., Ltd.)).

In addition, modified polyolefins in which polyolefin is modified and an ethylenically unsaturated bond is introduced thereinto can also be preferably exemplified (for example, methacrylate-introduced polyisoprene (Kuraprene (registered trademark) UC-102 and UC-203 (manufactured by Kuraray Co., Ltd.)).

Component A-1-2 has an ethylenically unsaturated group, and has at least an ethylenically unsaturated group derived from a conjugated diene hydrocarbon. As described above, in addition to this, Component A-1-2 may have an ethylenically unsaturated group derived from a (meth)acryloyloxy group or a (meth)acrylamide group on a main chain terminal or a side chain.

As Component A-1-2, at least one type of polymer selected from the group consisting of polyisoprene and polybutadiene is also preferably used. One type of polymer selected from the group consisting of polyisoprene and polybutadiene may be used alone, or two or more types thereof may be used in combination. In addition, an isoprene-butadiene copolymer may also be used.

The polyisoprene and polybutadiene may be polymers of which the main chain mainly has isoprene or butadiene as a monomer unit, and a part thereof may be converted into a saturated bond by hydrogenation. In addition, a site in the main chain or a terminal of the main chain of the polymer may be modified with amide, a carboxy group, a hydroxy group, or a (meth)acryloyloxy group, and may be epoxidized.

In the present invention, it is preferable that the proportion of a monomer unit derived from aliphatic hydrocarbon in the main chain (isoprene, butadiene, or hydrogenated products thereof) of the polyisoprene or polybutadiene be 80 mol% or greater. If the proportion of a monomer unit derived from aliphatic hydrocarbon in the main chain is 80 mol% or greater, rinsing properties become excellent, and therefore it is preferable. The content of a monomer unit derived from aliphatic hydrocarbon is more preferably 90 mol% or greater of the total monomer units constituting the main chain of Component A-1-2, even more preferably 95 mol% or greater, and particularly preferably 99 mol% or greater.

That is, for example, in the polyisoprene, the proportion of a monomer unit derived from isoprene and hydrogenated isoprene is preferably 80 mol% or greater in total, more preferably 90 mol% or greater, even more preferably 95 mol% or greater, and particularly preferably 99 mol% or greater.

Similarly, in the polybutadiene, the proportion of a monomer unit derived from butadiene and hydrogenated butadiene is preferably 80 mol% or greater in total, more preferably 90 mol% or greater, even more preferably 95 mol% or greater, and particularly preferably 99 mol% or greater.

In addition, in a case of using the isoprene-butadiene copolymer as Component A-1-2, the content of a monomer unit derived from isoprene, butadiene, and hydrogenated products thereof is preferably 80 mol% or greater in total, more preferably 90 mol% or greater, even more preferably 95 mol% or greater, and particularly preferably 99 mol% or greater.

It is known that isoprene is polymerized by 1,2-, 3,4-, or 1,4-additionon depending on a catalyst or reaction conditions, and in the present invention, polyisoprene polymerized by any of these additions may be used. Among these, from the viewpoint of obtaining appropriate elasticity as a relief, layer, *cis*-1,4-polyisoprene is preferably contained as a main component. The content of *cis*-1,4-polyisoprene is preferably 50 mass % or greater, more preferably 65 mass % or greater, even more preferably 80 mass % or greater, and particularly preferably 90 mass % or greater.

As the polyisoprene, natural rubbers may be used, and commercially available polyisoprenes can also be used and examples thereof include NIPOL (registered trademark) IR series (manufactured by ZEON CORPORATION).

It is known that butadiene is polymerized by 1,2- or 1,4-additionon depending on a catalyst or reaction conditions, and in the present invention, polybutadiene polymerized by any of these additions may be used. Among these, from the viewpoint of obtaining appropriate elasticity as a relief layer, 1,4-butadiene is more preferable as a main component.

The content of 1,4-polybutadiene is preferably 50 mass % or greater, more preferably 65 mass % or greater, even more preferably 80 mass % or greater, and particularly preferably 90 mass % or greater.

Moreover, the content of cis isomer and trans isomer is not particularly limited, and from the viewpoint of exhibiting rubber elasticity, cis product is preferable. The content of *cis*-1,4-polybutadiene is preferably 50 mass % or greater, more preferably 65 mass % or greater, even more preferably 80 mass % or greater, and particularly preferably 90 mass % or greater.

As the polybutadiene, commercially available products may be used, and examples thereof include NIPOL (registered trademark) BR series (manufactured by ZEON CORPORATION) and UBEPOL (registered trademark) BR series (manufactured by UBE INDUSTRIES, LTD.).

### A-2: Polyurethane resin

The resin composition for laser engraving of the present invention may comprise Component A-2: a polyurethane resin as Component A.

A polyurethane is a polymer obtained by a reaction between a polyol and a polyisocyanate. Here, the polyol is a compound having two or more hydroxy groups and the polyisocyanate is a compound having two or more isocyanato groups (-NCO). Examples of the polyols and the polyisocyanate include compounds described in above Compound a-iv: the polyurethane resin having a hydroxy group or an isocyanato group at a molecular terminal.

Specific preferred examples of the polyurethane include a compound having, as a molecular framework, a polycarbonatepolyurethane obtained by reacting an pliphatic polycarbonate diol and a diisocyanate compound.

Examples of the aliphatic polycarbonate diol include poly(ethylene carbonate) diol, poly(butylene carbonate) diol, poly(pentamethylene carbonate) diol, poly(hexamethylene carbonate) diol, poly((1,9-nonanediol; 2-methyl-1,8-octanediol) carbonate) diol, a polymer having 1,3-dioxan-2-one and 1,6-hexanediol regions, and a polymer having dimethyl carbonate and 1,6-hexanediol regions and a 2-oxepanone region.

Examples of commercial products of compounds having a carbonate bond in the molecule include PCDL (registered trademark) 'L4672', 'T5651', 'T6002', 'T5652', 'T5650J', and 'T4671' (all from Asahi Kasei Chemicals Corporation), Kuraray Polyol (registered trademark) 'C-2015N' (Kuraray Co., Ltd.), Placcel CD (registered trademark) 'CD205', 'CD205PL', 'CD205HL', 'CD210', 'CD210PL', 'CD220', and 'CD220PL' (all from Daicel Chemical Industries, Ltd.), and ETERNACOLL (registered trademark) 'UH', 'UHC', 'UC', and 'UM' (all from Ube Industries, Ltd.).

Moreover, Component A-2 is not limited the above compounds, and polyester-based or polyether-based polyurethanes may be used as Component A-2. Examples thereof include Resamine (registered trademark) ME-44ELP, ME-3612LP, ME-8105LP, and ME-8115LP (manufactured by Dainichiseika Color & Chemicals Mfg. Co., Ltd.), and the like.

### Component A-3: Thermoplastic elastomer

The resin composition for laser engraving of the present invention may comprise Component A-3: a thermoplastic elastomer as Component A. A thermoplastic elastomer is a material that becomes plasticized and flowable at high temperature and exhibits rubber elasticity at normal temperature (5°C to 35 °C). In a majority of thermoplastic elastomers, phases are chemically bonded by block copolymerization or graft copolymerization. When there is no chemical bond, a sufficiently finely dispersed state is formed. Component A-3 is preferably a thermoplastic elastomer in which phases are chemically bonded, and more preferably a block copolymer. The molecular structure of a block copolymer is formed from a soft segment such as a polyether or rubber molecule and a hard segment that does not exhibit plastic deformation at around normal temperature as in vulcanized rubber. It forms a multiphase structure in which the hard segment phase and the soft segment phase are finely dispersed. As a phase formed by the hard segment, various types exist, such as a frozen phase, a crystalline phase, a hydrogen-bonded phase, and an ionically-crosslinked phase.

Such a thermoplastic elastomer exhibits rubber elasticity at normal temperature. When a thermoplastic elastomer is used as Component A, a relief printing plate can deform according to asperities of a printed material during printing, ink laydown is excellent, and since its original shape is restored after it separates from the printed material, printing durability is excellent. Furthermore, since a thermoplastic elastomer exhibits flowability upon heating, handling such as mixing of materials is easy. For the above reasons, a thermoplastic elastomer is suitable when the resin composition for laser engraving of the present invention is applied to the production of a relief printing plate where the relief printing plate is required to have flexibility.

From the viewpoint of printing durability and hardness of a relief printing plate, the proportion of the hard segment in the thermoplastic elastomer is preferably 10 to 70 mass %, and more preferably 15 to 60 mass %.

From the viewpoint of flexibility and rubber elasticity being exhibited, the thermoplastic elastomer is preferably a polymer having a glass transition temperature (Tg) of no greater than 20°C, and more preferably no greater than 0°C. From the viewpoint of printing durability, the thermoplastic elastomer is preferably a polymer having a melting point (Tm) of at least 70°C, and more preferably at least 100°C.

Examples of the thermoplastic elastomer include a styrene-based thermoplastic elastomer, an ester-based thermoplastic elastomer, an olefin-based thermoplastic elastomer, an amide-based thermoplastic elastomer, a silicone-based thermoplastic elastomer, a vinyl chloride-based thermoplastic elastomer, a nitrile-based thermoplastic elastomer, a fluorine-based thermoplastic elastomer, and a crosslinked chlorinated polyethylene; among them a styrene-based thermoplastic elastomer, an ester-based thermoplastic elastomer, and an olefin-based thermoplastic elastomer are preferable, and a styrene-based thermoplastic elastomer is more preferable. The thermoplastic elastomer in the present invention does not include a natural rubber. For the purpose of improving the laser engraving sensitivity of these thermoplastic elastomers, those in which an easily decomposable functional group such as a carbamoyl group or a carbonate group is introduced into the main chain of the elastomer may be used. A thermoplastic polymer and the above-mentioned thermally decomposable polymer may be mixed and used.

The thermoplastic polymer and the above pyrolytic polymer may be used in a mixture.

Examples of Component A-3 include Component A-3-1: a styrene-based thermoplastic elastomer, Component A-3-2: an ester-based thermoplastic elastomer, Component A-3-3: an olefin-based thermoplastic elastomer, Component A-3-4: an ethylene-(meth)acrylic ester-based thermoplastic elastomer, and Component A-3-5: an amide-based thermoplastic elastomer.

### Component A-3-1: styrene-based thermoplastic elastomer

Examples of the styrene-based thermoplastic elastomer include a block copolymer of a polymer block (hard segment) mainly containing a styrene-based monomer-derived monomer unit and a polymer block (soft segment) mainly containing a conjugated diene compound-derived monomer unit, and one in which the conjugated diene compound-derived monomer unit of the block copolymer is hydrogenated.

Examples of the styrene-based monomer include styrene and a styrene derivative in which any site is substituted by at least one substituent (a halogen atom (F, Cl, Br, I), an alkyl group having 1 to 10 carbon atoms, an alkoxy group having 1 to 10 carbon atoms). Specific examples thereof include styrene, α-methylstyrene, vinyltoluene, and *t*-butylstyrene, and among them styrene is preferable.

Examples of the conjugated diene compound include butadiene, isoprene, chloroprene, and 2,3-dimethylbutadiene, and among them butadiene and isoprene are preferable.

Only one type thereof may be used, or two or more types thereof may be used in combination.

Specific examples of the styrene-based thermoplastic elastomer include a styrene-butadiene-styrene copolymer (SBS), a styrene-isoprene-styrene copolymer (SIS), a styrene-ethylene/butylene-styrene copolymer (SEBS), a styrene-ethylene/propylene-styrene copolymer (SEPS), a styrene-ethylene-ethylene/propylene-styrene copolymer (SEEPS), and among them SIS, SBS, and SEBS are preferable, and SBS is yet more preferable.

### Component A-3-2: ester-based thermoplastic elastomer

Preferred examples of the ester-based thermoplastic elastomer include a block copolymer formed by block copolymerization of a hard segment formed from a constituent unit represented by Formula I and a soft segment formed from a constituent unit represented by Formula II.

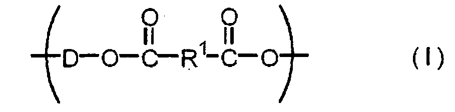

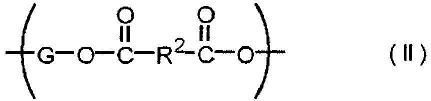

In Formula I and Formula II, D denotes a divalent aliphatic residue having a molecular weight of no greater than 250, and is preferably a straight-chain or branched alkylene group having 1 to 20 carbon atoms, and more preferably a straight-chain alkylene group having 2 to 6 carbon atoms.

R¹ denotes an aromatic ring-containing divalent residue having a molecular weight of no greater than 300, and is preferably a phenylene group, which may have a substituent. Examples of the substituent include an alkyl group having 1 to 10 carbon atoms, an aryl group having 6 to 20 carbon atoms, an alkoxy group having 1 to 10 carbon atoms, a halogen atom (F, Cl, Br, I), an amino group, and an alkylamino group and a dialkylamino group having an alkyl group having 1 to 10 carbon atoms.

G denotes a divalent residue formed by removing hydroxy groups from the two terminals of a poly(alkylene oxide) glycol having an average molecular weight of 400 to 3,500.

R² denotes a divalent residue having a molecular weight of no greater than 300, and denotes an alkylene group having 1 to 30 carbon atoms or an arylene group having 6 to 30 carbon atoms. R² may have the substituent described for R¹.

Furthermore, in the present invention, a block copolymer formed by block copolymerization of a hard segment comprising a constituent unit represented by Formula I' and a soft segment comprising a constituent unit represented by Formula II' is more preferable.

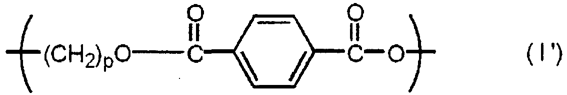

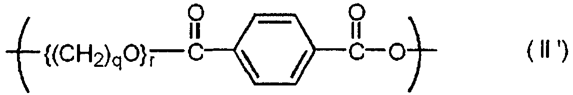

In Formula I', p denotes an integer of 1 to 4, and from the viewpoint of availability of materials it is preferably 2 or 4.

In Formula II', q denotes an integer of 1 to 10, and from the viewpoint of availability of materials it is preferably 2 to 4.

r denotes an integer of 1 to 500, and from the viewpoint of flexibility and rubber elasticity being exhibited it is preferably 5 to 100.

In the present invention, it is particularly preferable that an aromatic polyester comprising a constituent unit represented by Formula I' above is tetramethylene terephthalate, and an aliphatic polyether comprising a constituent unit represented by Formula II' above is an alkylene ether terephthalate. Specific examples include a polybutylene terephthalate/polytetramethylene ether glycol terephthalate block copolymer.

### Component A-3-3: olefin-based thermoplastic elastomer

The olefin-based thermoplastic elastomer is one in which a polyolefin resin as a hard segment and an olefin-based elastomer as a soft segment form a multiphase.

The polyolefin as a hard segment is preferably polyethylene or polypropylene.

The olefin-based elastomer as a soft segment is preferably a copolymer formed from a monomer unit derived from ethylene and a constituent unit derived from an α-olefin unit having at least 3 carbon atoms.

Examples of the α-olefin having at least 3 carbon atoms include α-olefins such as propylene, 1-butene, 2-methyl-1-butene, 3-methyl-1-butene, 1-pentene, 4-methyl-1-pentene, 1-hexene, 1-octene, 1-decene, and 1-octadecene.

Specific examples of the olefin-based elastomer include an ethylene-propylene random copolymer, an ethylene-butene random copolymer, an ethylene-hexene random copolymer, an ethylene-octene random copolymer, an ethylene-decene random copolymer, and an ethylene-4-methylpentene random copolymer, and among them an ethylene-propylene random copolymer and an ethylene-butene random copolymer are preferable.

### Component A-3-4: ethylene-(meth)acrylate ester-based thermoplastic elastomer

With regard to the ethylene-(meth)acrylate ester-based thermoplastic elastomer, examples thereof include a block copolymer comprising a polymer block (hard segment) mainly containing ethylene and a polymer block (soft segment) derived from a (meth)acrylate ester.

Examples of the (meth)acrylate ester include methyl (meth)acrylate, ethyl (meth)acrylate, *n*-butyl (meth)acrylate, isobutyl (meth)acrylate, isopentyl (meth)acrylate, *n*-hexyl (meth)acrylate, isooctyl (meth)acrylate, 2-ethylhexyl (meth)acrylate, *n*-octyl (meth)acrylate, isononyl (meth)acrylate, *n*-decyl (meth)acrylate, and isodecyl (meth)acrylate. These constituent units may be contained on their own or as a mixture of two or more types.

Furthermore, a terpolymer comprising a constituent unit derived from carbon monoxide in addition to the constituent units derived from ethylene and a (meth)acrylate ester is also preferable as an ethylene-(meth)acrylate ester-based thermoplastic elastomer.

Specific examples of the ethylene-(meth)acrylate ester-based thermoplastic elastomer include an ethylene/*n*-butyl acrylate/carbon monoxide copolymer and an ethylene/decyl acrylate/carbon monoxide copolymer, and among them an ethylene/*n*-butyl acrylate/carbon monoxide copolymer is preferable.

### Component A-3-5: amide-based thermoplastic elastomer

As an amide-based thermoplastic elastomer, a multiblock copolymer comprising a polyamide as a hard segment and a polyester diol or polyether diol, which have a low glass transition temperature, as a soft segment can be cited as an example.

Here, examples of the polyamide component include nylon-6, -66, -610, -11, and -12, and among them nylon-6 and nylon-12 are preferable.

Examples of the polyether diol include poly(oxytetramethylene) glycol and poly(oxypropylene) glycol.

Examples of the polyester diol include poly(ethylene-1,4-adipate) glycol, poly(butylene-1,4-adipate) glycol, and polytetramethylene glycol. Specific examples of the polyamide-based elastomer include a nylon 12/polytetramethylene glycol block copolymer.

The amide-based thermoplastic elastomer is also available as a commercial product, and examples thereof include DEAMIDE E40-S1 (manufactured by Daicel Evonik Ltd.).

### Component A-4: vinyl-based polymer

In the present invention, as Component A, A-4: a vinyl-based polymer (hereinafter, also referred to as "vinyl resin") can be used. As the vinyl resin, polyvinyl acetate, polyvinyl alcohol, polyvinyl acetal, and derivatives thereof are preferable.

In this description, hereinafter, polyvinyl acetal and derivatives thereof are called just a polyvinyl acetal derivative. That is, a polyvinyl acetal derivative includes polyvinyl acetal and derivatives thereof, and is a generic term used to refer to compounds obtained by converting polyvinyl alcohol obtained by saponifying polyvinyl acetate into a cyclic acetal.

The acetal content in the polyvinyl acetal derivative (mole% of vinyl alcohol units converted into acetal relative to the total number of moles of vinyl acetate monomer starting material as 100 mol%) is preferably 30 to 90 mol%, more preferably 50 to 85 mol%, and particularly preferably 55 to 78 mol%.

The vinyl alcohol unit in the polyvinyl acetal is preferably 10 to 70 mol% relative to the total number of moles of the vinyl acetate monomer starting material, more preferably 15 to 50 mol%, and particularly preferably 22 to 45 mol%.

Furthermore, the polyvinyl acetal may have a vinyl acetate unit as another component, and the content thereof is preferably 0.01 to 20 mol%, and more preferably 0.1 to 10 mol%. The polyvinyl acetal derivative may further have another copolymerized constitutional unit.

Examples of the polyvinyl acetal derivative include a polyvinyl butyral derivative, a polyvinyl propylal derivative, a polyvinyl ethylal derivative, and a polyvinyl methylal derivative. Among them, a polyvinyl butyral derivative (hereinafter, it is also referred to as a "PVB derivative") is a derivative that is preferable. In this description, for examples, a polyvinyl butyral derivative includes polyvinyl butyral and derivatives thereof, and the same can be said for other polyvinyl acetal derivatives.

From the viewpoint of a balance being achieved between engraving sensitivity and film formation properties, the weight-average molecular weight of the polyvinyl acetal derivative is preferably 5,000 to 800,000, more preferably 8,000 to 500,000 and, from the viewpoint of improvement of rinsing properties for engraving residue, particularly preferably 50,000 to 300,000.

Hereinafter, polyvinyl butyral and derivatives thereof are cited for explanation as particularly preferable examples of polyvinyl acetal, but are not limited to these.

Polyvinyl butyral has a structure as shown below, and is constituted while including these structural units, and L is preferably 50 mol% and more.

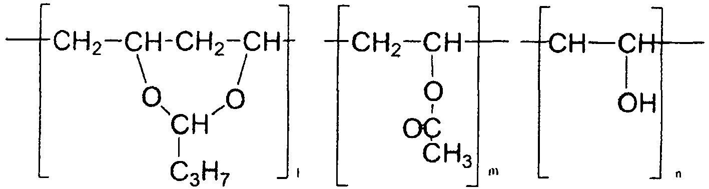

The PVB derivative is also available as a commercial product, and preferred examples thereof include, from the viewpoint of alcohol dissolving capability (particularly, ethanol), "S-REC B" series and "S-REC K (KS)" series manufactured by SEKISUI CHEMICAL CO., LTD. and "DENKA BUTYRAL" manufactured by DENKI KAGAKU KOGYO KABUSHIKI KAISHA. From the viewpoint of alcohol dissolving capability (particularly, ethanol), "S-REC B" series manufactured by SEKISUI CHEMICAL CO., LTD. and "DENKA BUTYRAL" manufactured by DENKI KAGAKU KOGYO KABUSHIKI KAISHA are more preferable. Among these, particularly preferable commercial products are shown below along with the values L, m, and n in the above formulae and the molar weight. Examples of "S-REC B" series manufactured by SEKISUI CHEMICAL CO., LTD. include "BL-1" (L=61, m=3, n=36, weight-average molecular weight: 19,000), "BL-1 H" (L=67, m=3, n=30, weight-average molecular weight: 20,000), "BL-2" (L=61, m=3, n=36, weight-average molecular weight: about 27,000), "BL-5" (L=75, m=4, n=21, weight-average molecular weight: 32,000), "BL-S" (L=74, m=4, n=22, weight-average molecular weight: 23,000), "BM-S" (L=73, m=5, n=22, weight-average molecular weight: 53,000), and "BH-S" (L=73, m=5, n=22, weight-average molecular weight: 66,000), and examples of "DENKA BUTYRAL" manufactured by DENKI KAGAKU KOGYO include "#3000-1" (L=71, m=1, n=28, weight-average molecular weight: 74,000), "#3000-2" (L=71, m=1, n=28, weight-average molecular weight: 90,000), "#3000-4" (L=71, m=1, n=28, weight-average molecular weight: 117,000), "#4000-2" (L=71, m=1, n=28, weight-average molecular weight: 152,000), "#6000-C" (L=64, m=1, n=35, weight-average molecular weight: 308,000), "#6000-EP" (L=56, m=15, n=29, weight-average molecular weight: 381,000), "#6000-CS" (L=74, m=1, n=25, weight-average molecular weight: 322,000), and "#6000-AS" (L=73, m=1, n=26, weight-average molecular weight: 242,000).

When the relief-forming layer is formed using the PVB derivative, a method of casting and drying a solution in which a solvent is dissolved is preferable from the viewpoint of smoothness of the film surface.

### Component A-5: polymer having hydroxyl group in molecule

Examples of Component A-5 include a hydroxycarboxylic acid unit-containing polyester resin. As such a polyester resin, specifically, one selected from the group consisting of a polyhydroxyalkanoate (PHA), a lactic acid-based polymer, polyglycolic acid (PGA), polycaprolactone (PCL), polybutylene succinate), derivatives thereof, and mixtures thereof is preferable.

An acrylic resin having a hydroxyl group may be used as Component A-5. As an acrylic monomer used in synthesis of the acrylic resin having a hydroxy group, for example, a (meth)acrylic acid ester, a crotonic acid ester, or a (meth)acrylamide that has a hydroxy group in the molecule is preferable. Specific examples of such a monomer include 2-hydroxyethyl(meth)acrylate, 2-hydroxypropyl(meth)acrylate, and 4-hydroxybutyl(meth)acrylate. A copolymer formed by polymerization of the above with a known (meth)acrylic-based monomer or vinyl-based monomer is preferably used.

Furthermore, as Component A-5, it is also possible to use an epoxy resin having a hydroxy group in a side chain. Preferred specific examples thereof include an epoxy resin formed by polymerization, as a starting material monomer, of an adduct of bisphenol A and epichlorohydrin.

### Component A-6: polyurea resin

Component A-6: a polyuria resin may be used as Component A.

Polyurea resin may be basically obtained by polyaddition between a diamine compound and a diisocyanate compound or deammoniation between a diamine compound and urea.

Examples of the diamine compound and diisocyanate compound that are used for the synthesis of polyurea resin in the present invention are described below, but the present invention is not limited by these examples.

Examples of the diamine compound may include: ethylenediamine, 1,3-propanediamine, 1,2-propanediamine, hexamethylenediamine, octamethylenediamine, *o*-phenylenediamine, *m*-phenylenediamine, *p*-phenylenediamine, piperazine, 2,5-dimethylpiperazine, 4,4'-diaminophenylether, 3,3'-diaminodiphenylsulfone, and xylylenediamine.

Examples of the diisocyanate compound may include a compound selected from the same group of diisocyanates as that described in the foregoing section of polyurethane.

As Component A, Component A-1: a polymer having an ethylenically unsaturated group in a molecule and Component A-3: a thermoplastic elastomer are preferable, Component A-1-2: a polymer having a monomer unit derived from a conjugated diene hydrocarbon and Component A-3-1: a styrene-based thermoplastic elastomer are more preferable, a polymer having a monomer unit derived from butadiene or isoprene is even more preferable, and polybutadiene or polyisoprene is particularly preferable.

In the resin composition for laser engraving of the present invention, the content of Component A is preferably 20 mass % to 95 mass %, more preferably 30 mass % to 90 mass %, and even more preferably 40 mass % to 80 mass % relative to the total amount of the solid content. Here, the "solid content" refers to components in the resin composition for laser engraving excluding volatile components such as a solvent.

If the content of Component A is in the above range, printing durability is improved, and thus it is preferable.

### Component B: Carbon black of which pH is higher than 6 and the average particle size when being dispersed into water is equal to or less than 500 nm.

The resin composition for laser engraving of the present invention comprises carbon black (hereinafter, referred to as a specific, carbon black) of which pH is higher than 6 and the average particle size when being dispersed into water is equal to or less than 500 nm as Component B. The carbon black has a function as a photothermal conversion agent.

By comprising Component B, a relief printing plate precursor and a relief printing plate that is excellent in rinsing properties and excellent engraving sensitivity, and can give a sharp engraved shape can be obtained.

In the present invention, the average particle size when the specific carbon black is dispersed into water is equal to or less than 500nm. If the average particle size when being dispersed into water is larger than 500 nm, sufficient engraving sensitivity and rinsing properties are not obtained, and also a sharp engraved shape is not obtained.

The average particle size when being dispersed into water is preferably 50 nm to 500 nm, more preferably 50 nm to 250 nm, even more preferably 60 nm to 200 nm, and particularly preferably 70 nm to 150 nm. If the average particle size when Component B is dispersed into water is in the above range, excellent engraving sensitivity and rinsing properties, and further, a sharp engraved shape can be obtained, and thus it is preferable.

The average particle size when the carbon black is dispersed into water is measured by the following method. Specifically, 5 ml of carbon black aqueous solution of 0.05 mass % is prepared in a 10 mL vial, and sonication is performed thereon at 25°C for 1 minute by using a desktop type ultrasonic cleaner BRANSONIC 5510 (model number: B5510J-MT, oscillation frequency 42 kHz, output 180 W, manufactured by Emanson Japan Ltd.). The average particle size (median size, d50) of the sample subjected to the above treatment is measured through a histogram method particle size distribution analysis (Marquardt method) by using a dense suspension particle size analyzer FPAR-1000 (manufactured by Otsuka Electronics Co., Ltd.).

pH of Component B is higher than 6. pH is preferably higher than 6 and equal to or lower than 10, more preferably higher than 6 and equal to or lower than 9, even more preferably higher than 6 and equal to or lower than 8, particularly preferably 6.5 to 8.0, and most preferably 7.0 to 8.0. If pH of Component B is equal to or lower than 6, sufficient engraving sensitivity and rinsing properties are not obtained, and also a sharp engraved shape is not obtained.

If pH of Component B is in the above range, excellent engraving sensitivity and rinsing properties, and further, a sharp engraved shape can be obtained, and thus it is preferable.

Here, pH of the carbon black means a pH of a mixture of the carbon black and pure water, and the value thereof is measured based on ASTM D-1512.

To make the average particle size when being dispersed into water be equal to or less than 500nm, it is preferable that an acid group be introduced by surface-modifying the carbon black, and to make pH be higher than 6, it is preferable that the acid group be neutralized to make the carbon black into carbon black having a neutralized acid group.

That is, Component B preferably has a neutralized acid group on the surface thereof. By having a neutralized acid group on the surface, dispersibility becomes excellent, and it is possible to make pH be in the range higher than 6.

The amount of neutralized acid group which Component B has on the surface thereof is preferably equal to or greater than 0.15 meq/g, more preferably equal to or greater than 0.3 meq/g, and even more preferably equal to or greater than 0.35 meq/g. The upper limit is not particularly limited, and from the viewpoint of ease of preparation, the upper limit is preferably equal to or less than 1.5 meq/g, more preferably equal to or less 1.2 meq/g, and even more preferably equal to or less than 0.9 meq/g.

The amount (meq/g) of neutralized acid group is calculated by the following formula (1).

(Amount of neutralized acid group) = (amount (meq/g) of acid group which carbon black subjected to an acid treatment has in a non-neutralized state) - (amount (meq/g) of acid group which carbon black subjected to a neutralization treatment has) (1)

Regarding the amount of the acid group on the surface of the carbon black, an amount of acid group in the pKa range of 2 to 5 in selective neutralization method is used as the measured value of the amount of the acid group in the present invention.

Specifically, pKa of a carboxy group present on the surface is 2 to 5, and pKa of a phenolic hydroxyl group is 8 to 10. Assuming a dilute NaHCO₃ aqueous solution containing carbon black, since pKa of a HCO₃⁻ ion is 6.34, only a carboxy group which is weaker (smaller pKa) acid than this is neutralized. Thus, it is possible to specifically measure the amount of the acid group in the pKa range of 2 to 5. Details are described from page 144 of "Handbook of Carbon Black (third edition)" (Carbon black association, published in 1995).

Examples of the acid group include a carboxy group (-COOH), a sulfonic acid group (-SO₃H), a phosphonic acid group (-PO₃H₂), and a hydroxy group (-OH), and among these, a carboxy group and a hydroxy group are preferable, and a carboxy group is most preferable.

Examples of the basic compound for neutralization include alkali metal hydroxides such as lithium hydroxide, sodium hydroxide, potassium hydroxide, and cesium hydroxide, alkaline earth metal hydroxides such as magnesium hydroxide, calcium hydroxide, and strontium hydroxide, ammonia, quaternary ammonium hydroxides such as tetramethyl ammonium hydroxide, tetraethyl ammonium hydroxide, and tetrabutyl ammonium hydroxide, heterocyclic bases such as pyridine, quinoline, and piperidine, hydrazine derivatives, and amidine derivatives. Among these, alkali metal hydroxides and alkaline earth metal hydroxides are preferable.

Examples of the carbon black include furnace black (including high color furnace black and medium color furnace black), thermal lamp black, acetylene black, and channel black. Carbon black is subjected to an oxidation treatment to introduce thereinto an acid group by a gas phase or a liquid phase oxidation method using oxidant such as ozone, nitric acid, hydrogen peroxide, and nitrogen oxide, or a surface-modifying method such as a plasma treatment.

The particle size of the specific carbon black in the resin composition is preferably equal to or smaller than 1,000 nm, more preferably equal to or smaller than 800 nm, and even more preferably equal to or smaller than 600 nm, from the viewpoint of obtaining sufficient engraving sensitivity. The lower limit of the particle size of the specific carbon black in the resin composition is not particularly limited, and from the viewpoint of ease of manufacture, it is preferably at least 1 nm, more preferably at least 10 nm, and even more preferably at least 100 nm.

The particle size of the specific carbon black in the resin composition is determined by a number average value (number of measurement: 100) of equivalent circle diameters of aggregates when observing a ultramicrotome sample piece of a thickness of 2 µm using an electron microscope (magnification of 100 times). Details are described from page 184 of "Handbook of Carbon Black (third edition)" (Carbon black association, published in 1995).

The resin composition for laser engraving of the present invention preferably comprises Component B in an amount of at least 1 mass % but no greater than 50 mass % relative to the total amount of the solid content of the resin composition for laser engraving. The total amount of the solid content refers to the total mass excluding volatile components from the resin composition for laser engraving.

The resin composition for laser engraving of the present invention more preferably comprises Component B in an amount of 1 mass % to 40 mass %, even more preferably in an amount of 1 mass % to 30 mass %, and particularly preferably in an amount of 3 mass % to 20 mass %.

If the content of Component B is in the above range, excellent engraving sensitivity and rinsing properties, and further, a sharp engraved shape can be obtained, and thus it is preferable.

In the present invention, in addition to Component B, other photothermal conversion agents may be comprised in the resin composition for laser engraving. As the examples of other photothermal conversion agents, various dyes and pigments can be mentioned, and the content of other photothermal conversion agents is preferably equal to or lower than the content of Component B. The content of other photothermal conversion agents is preferably equal to or less than 30 mass %, more preferably equal to or less than 20 mass %, and even more preferably equal to or less than 10 mass %, relative to the total amount of Component B and other photothermal conversion agents, and most preferably, other photothermal conversion agents are not comprised. Other photothermal conversion agents is described in, for example, paragraphs [0087] to [0091] of JP-A-2013-11827.

In the present invention, the total amount of Components A and B is preferably 50 mass % to 99 mass %, more preferably 55 mass % to 95 mass %, and even more preferably 60 mass % to 90 mass % relative to the total solid content of the resin composition for laser engraving. If the total amount of Components A and B is in the above range, a relief printing plate precursor for laser engraving that is excellent in engraving sensitivity, and can give a sharp engraved shape can be obtained.

### Component C: ethylenically unsaturated compound

The resin composition for laser engraving of the present invention preferably comprises an ethylenically unsaturated compound as Component C. As the ethylenically unsaturated compound, Component C-1: polyfunctional ethylenically unsaturated compound is preferable, and Component C-2: monofunctional ethylenically unsaturated compound may be contained with the polyfunctional ethylenically unsaturated compound. Component C may be used alone as one type or may be used in a combination of two or more types, and preferably contains at least Component C-1, however there is no particular limitation thereto.

The molecular weight of Component C (in a case of having a molecular weight distribution, weight average molecular weight) is less than 4,500, preferably 100 to 4,000, and more preferably 150 to 2,000. If the molecular weight is in the above range, printing durability is excellent, and thus it is preferable.

### Component C-1: polyfunctional ethylenically unsaturated compound

The resin composition for laser engraving of the present invention preferably comprises Component C-1: a polyfunctional ethylenically unsaturated compound

As the polyfunctional ethylenically unsaturated compound, compounds having 2 to 20 terminal ethylenically unsaturated groups are preferable. These compound groups are widely known in the present industrial field, and, in the present invention, these may be used without particular limitation. These have chemical forms such as a monomer, a prepolymer, that is, a dimer, a trimer and an oligomer, or copolymers thereof, and mixtures thereof.

Examples of compounds from which the ethylenically unsaturated group in the polyfunctional ethylenically unsaturated compound is derived include unsaturated carboxylic acids (such as acrylic acid, methacrylic acid, itaconic acid, crotonic acid, isocrotonic acid and maleic acid), and esters and amides thereof. Preferably esters of an unsaturated carboxylic acid and an aliphatic polyhydric alcoholic compound, or amides of an unsaturated carboxylic acid and an aliphatic polyvalent amine compound are used. Moreover, addition reaction products of unsaturated carboxylic acid esters or amides having a nucleophilic substituent such as a hydroxyl group or an amino group with polyfunctional isocyanates or epoxides, and dehydrating condensation reaction products with a polyfunctional carboxylic acid, etc. are also used favorably. Moreover, addition reaction products of unsaturated carboxylic acid esters or amides having an electrophilic substituent such as an isocyanato group or an epoxy group with monofunctional or polyfunctional alcohols or amines, and substitution reaction products of unsaturated carboxylic acid esters or amides having a leaving group such as a halogen group or a tosyloxy group with monofunctional or polyfunctional alcohols or amines are also favorable. Moreover, as another example, the use of compounds obtained by replacing the unsaturated carboxylic acid with a vinyl compound, an allyl compound, an unsaturated phosphonic acid, styrene or the like is also possible.

From the viewpoint of the reactivity, the ethylenically unsaturated group contained in the polyfunctional ethylenically unsaturated compound is preferably a residue of each of acrylates, methacrylates, vinyl compounds and allyl compounds, and is more preferably a residue of acrylates or methacrylates.

Specific examples of ester monomers of an aliphatic polyhydric alcohol compound and an unsaturated carboxylic acid include acrylic acid esters such as ethylene glycol diacrylate, triethylene glycol diacrylate, 1,3-butanediol diacrylate, tetramethylene glycol diacrylate, propylene glycol diacrylate, neopentyl glycol diacrylate, trimethylolpropane triacrylate, trimethylolpropane tri(acryloyloxypropyl) ether, trimethylolethane triacrylate, hexanediol diacrylate, 1,4-cyclohexanediol diacrylate, tetraethylene glycol diacrylate, pentaerythritol diacrylate, pentaerythritol triacrylate, pentaerythritol tetraacrylate, dipentaerythritol diacrylate, dipentaerythritol hexaacrylate, sorbitol triacrylate, sorbitol tetraacrylate, sorbitol pentaacrylate, sorbitol hexaacrylate, tri(acryloyloxyethyl) isocyanurate, and a polyester acrylate oligomer.

Examples of methacrylic acid esters include tetramethylene glycol dimethacrylate, triethylene glycol dimethacrylate, neopentyl glycol dimethacrylate, trimethylolpropane trimethacrylate, trimethylolethane trimethacrylate, ethylene glycol dimethacrylate, 1,3-butanediol dimethacrylate, hexanediol dimethacrylate, pentaerythritol dimethacrylate, pentaerythritol trimethacrylate, pentaerythritol tetramethacrylate, dipentaerythritol dimethacrylate, dipentaerythritol hexamethacrylate, sorbitol trimethacrylate, sorbitol tetramethacrylate, bis[*p*-(3-methacryloxy-2-hydroxypropoxy)phenyl]dimethylmethane, and bis[*p*-(methacryloxyethoxy)phenyl]dimethylmethane.

Examples of the itaconic acid ester include ethylene glycol diitaconate, propylene glycol diitaconate, 1,3-butanediol diitaconate, 1,4-butanediol diitaconate, tetramethylene glycol diitaconate, pentaerythritol diitaconate, and sorbitol tetraitaconate.

Examples of the crotonic acid ester include ethylene glycol dicrotonate, tetramethylene glycol dicrotonate, pentaerythritol dicrotonate, and sorbitol tetracrotonate.

Examples of the isocrotonic acid ester include ethylene glycol diisocrotonate, pentaerythritol diisocrotonate, and sorbitol tetraisocrotonate.

Examples of the maleic acid ester include ethylene glycol dimaleate, triethylene glycol dimaleate, pentaerythritol dimaleate, and sorbitol tetramaleate.

As examples of other esters, for example, aliphatic alcohol-based esters described in JP-B-46-27926 (JP-B denotes a Japanese examined patent application publication), JP-B-51-47334, and JP-A-57-196231, those having an aromatic skeleton described in JP-A-59-5240, JP-A-59-5241, and JP-A-2-226149, and those containing an amino group described in JP-A-1-165613 may suitably be used.

These ester monomers may be used as a mixture.

Specific examples of an amide monomer from an aliphatic polyvalent amine compound and an unsaturated carboxylic acid include methylene bis(meth)acrylamide, 1,6-hexamethylene bis(meth)acrylamide, diethylenetriamine tris(meth)acrylamide, and xylylene bis(meth)acrylamide.

Examples of other preferred amide-based monomer include those having a cyclohexylene structure described in JP-B-54-21726.

Furthermore, a urethane-based addition-polymerizable polyfunctional compound produced by an addition reaction of an isocyanate and a hydroxy group is also suitable. Specific examples thereof include a vinyl urethane compound containing two or more polymerizable vinyl groups per molecule in which a polyisocyanate compound having two or more isocyanato groups per molecule described in JP-B-48-41708 is added to a hydroxy group-containing vinyl monomer represented by Formula i below.

CH₂=C(R)COOCH₂CH(R')OH (i)

(R and R' independently denote H or CH₃.)

Furthermore, urethane acrylates described in JP-A-51-37193, JP-B-2-32293, and JP-B-2-16765, and urethane compounds having an ethylene oxide-based skeleton described in JP-B-58-49860, JP-B-56-17654, JP-B-62-39417, and JP-B-62-39418 are also suitable.

Furthermore, by use of addition-polymerizable compounds having an amino structure in the molecule described in JP-A-63-277653, JP-A-63-260909, and JP-A-1-105238, a resin composition for laser engraving which can crosslink in a short time can be obtained.

Other examples of the polyfunctional ethylenically unsaturated compound include polyester acrylates such as those described in JP-A-48-64183, JP-B-49-43191, and JP-B-52-30490, and polyfunctional acrylates and methacrylates such as epoxy acrylates etc. formed by a reaction of an epoxy resin and (meth)acrylic acid. Examples also include specific unsaturated compounds described in JP-B-46-43946, JP-B-1-40337, and JP-B-1-40336, and vinylphosphonic acid-based compounds described in JP-A-2-25493. In some cases, perfluoroalkyl group-containing structures described in JP-A-61-22048 are suitably used. Moreover, those described as photocuring monomers or oligomers in the Journal of the Adhesion Society of Japan, Vol. 20, No. 7, pp. 300 to 308 (1984) may also be used.

Examples of the vinyl compounds include butanediol-1,4-divinyl ether, ethylene glycol divinyl ether, 1,2-propanediol divinyl ether, 1,3-propanediol divinyl ether, 1,3-butanediol divinyl ether, 1,4-butanediol divinyl ether, neopentyl glycol divinyl ether, trimethylolpropane tirvinyl ether, trimethylolethane trivinyl ether, hexanediol divinyl ether, tetraethylene glycol divinyl ether, pentaerythritol divinyl ether, pentaerythritol trivinyl ether, pentaerythritol tetravinyl ether, sorbitol tetravinyl ether, sorbitol pentavinyl ether, ethylene glycol diethylenevinyl ether, ethylene glycol dipropylenevinyl ether, trimethylolpropane triethylenevinyl ether, trimethylolpropane diethylenevinyl ether, pentaerythritol diethylenevinyl ether, pentaerythritol triethylenevinyl ether, pentaerythritol tetraethylenevinyl ether, 1,1,1-tris[4-(2-vinyloxyethoxy)phenyl]ethane, bisphenol A divinyloxyethyl ether, divinyl adipate, etc.

Examples of the allyl compounds include polyethylene glycol diallyl ether, 1,4-cyclohexane diallyl ether, 1,4-diethylcyclohexyl diallyl ether, 1,8-octane diallyl ether, trimethylolpropane diallyl ether, trimethylolethane triallyl ether, pentaerythritol triallyl ether, pentaerythritol tetraallyl ether, dipentaerythritol pentaallyl ether, dipentaerythritol hexaallyl ether, diallyl phthalate, diallyl terephthalate, diallyl isophthalate, triallyl isocyanurate, triallyl phosphate, etc.

Particularly, since the intersolubility of various kinds of Component A is excellent, and the crosslinked portion has the same low temperature degradable skeleton as that of an acrylic resin, Component C-1 is more preferably a (meth)acrylate compound from the viewpoint of increasing the engraving sensitivity.

Among these, preferred examples of Component C-1 include diethylene glycol di(meth)acrylate, dipentaerythritol hexa(meth)acrylate, tricyclodecanedimethanol di(meth)acrylate, trimethylolpropane tri(meth)acrylate, pentaerythritol tetra(meth)acrylate, and 1,6-hexanediol di(meth)acrylate.

The resin composition for laser engraving of the present invention may use only one kind of Component C-1, or may use two or more kinds of Component C-1 in combination.

The total content of (Component D-1) a polyfunctional ethylenically unsaturated compound in the resin composition for laser engraving of the present invention is preferably 0.1 mass % to 40 mass %, and more preferably in the range of 1 mass % to 20 mass %, relative to the total solids content of the resin composition from the viewpoint of the flexibility and brittleness of the crosslinked film.

### Component C-2: monofunctional ethylenically unsaturated compound

The resin composition for laser engraving of the present invention may comprise Component C-2: a monofunctional ethylenically unsaturated compound, but if the resin composition comprises Component C-2: a monofunctional ethylenically unsaturated compound, it is preferable that the resin composition comprise Component C-2 in combination with Component C-1 a polyfunctional ethylenically unsaturated compound.

Examples of the monofunctional ethylenically unsaturated compound having one ethylenically unsaturated bond in the molecule include esters of unsaturated carboxylic acids (for example, acrylic acid, methacrylic acid, itaconic acid, crotonic acid, isocrotonic acid, and maleic acid) and monohydric alcohol compounds, and amides of unsaturated carboxylic acids and monovalent amine compounds.

Furthermore, addition reaction products of an unsaturated carboxylic acid ester or amide having a nucleophilic substituent such as a hydroxyl group, an amino group or a mercapto group, and an isocyanate or an epoxide, and dehydration condensation reaction products with a monofunctional or polyfunctional carboxylic acid, are also suitably used.

Furthermore, addition reaction products of an unsaturated carboxylic acid ester or amide having an electrophilic substituent such as an isocyanato group or an epoxy group, and an alcohol, an amine or a thiol, and substitution reaction products of an unsaturated carboxylic acid ester or amide having a detachable substituent such as a halogeno group or a tosyloxy group, and an alcohol, an amine or a thiol, are also suitable.

Also, as other examples, a group of compounds substituted with unsaturated phosphonic acid, styrene, vinyl ether or the like instead of the unsaturated carboxylic acid described above, can also be used.

The polymerizable compound is not particularly limited, and various known compounds can be used in addition to the compounds exemplified above. For example, those compounds described in JP-A-2009-204962 and the like may also be used.

The resin composition for laser engraving of the present invention may use only one kind of Component C-2, or may use two or more kinds of Component C-2 in combination.

The total content of Component C-2: a monofunctional ethylenically unsaturated compound in the resin composition for laser engraving of the present invention is preferably 0.1 mass % to 40 mass %, and more preferably in the range of 1 mass % to 20 mass %, relative to the total solids content of the resin composition, from the viewpoint of the flexibility or brittleness of the crosslinked film.

The total content of Component C in the resin composition for laser engraving of the present invention is preferably 0.1 mass % to 40 mass %, more preferably 1 mass % to 30 mass %, even more preferably 5 mass % to 25 mass %, and most preferably 10 mass % to 20 mass % relative to the total solid content of the resin composition, from the viewpoint of flexibility or brittleness of the crosslinked film.

### Component D: polymerization initiator

In order to promote formation of a crosslinked structure, the resin composition for laser engraving of the present invention preferably comprises a polymerization initiator as Component D.

As the polymerization initiator, a photopolymerization initiator and a thermal polymerization initiator can be exemplified, and since crosslinking by heat is preferable, a thermal polymerization initiator is preferable. As the polymerization initiator, polymerization initiators known to those skilled in the art can be used without limitation. Hereinafter, a radical polymerization initiator which is a preferable polymerization initiator will be described in detail, however the present invention is not limited to these descriptions.

In the present invention, preferable polymerization initiators include a: aromatic ketones, b: onium salt compounds, c: organic peroxides, d: thio compounds, e: hexaallylbiimidazole compounds, f: ketoxime ester compounds, g: borate compounds, h: azinium compounds, i: metallocene compounds, j: active ester compounds, k: compounds having a carbon halogen bond, and I: azo compounds. Hereinafter, although specific examples of the a to I are cited, the present invention is not limited to these.

In the present invention, when applies to the relief-forming layer of the relief printing plate precursor, from the viewpoint of engraving sensitivity and making a favorable relief edge shape, c: organic peroxides and l: azo compounds are more preferable, and c: organic peroxides are particularly preferable.

The a: aromatic ketones, b: onium salt compounds, d: thio compounds, e: hexaallylbiimidazole compounds, f: ketoxime ester compounds, g: borate compounds, h: azinium compounds, i: metallocene compounds, j: active ester compounds, and k: compounds having a carbon halogen bonding may preferably include compounds described in paragraphs 0074 to 0118 of JP-A-2008-63554.

Moreover, c: organic peroxides and I: azo compounds preferably include the following compounds.

### c: organic peroxide

Preferred examples of the c: organic peroxide as a polymerization initiator that can be used in the present invention include peroxyester-based ones such as 3,3',4,4'-tetra(*t*-butylperoxycarbonyl)benzophenone, 3,3',4,4'-tetra(*t-*amylperoxycarbonyl)benzophenone, 3,3',4,4'-tetra(*t-*hexylperoxycarbonyl)benzophenone, 3,3',4,4'-tetra(*t-*octylperoxycarbonyl)benzophenone, 3,3',4,4'-tetra(cumylperoxycarbonyl)benzophenone, 3,3',4,4'-tetra(*p*-isopropylcumylperoxycarbonyl)benzophenone, di-*t*-butyldiperoxyisophthalate, *t*-butylperoxybenzoate, *t-*butylperoxy-3-methylbenzoate, *t*-butylperoxylaurate, *t-*butylperoxypivalate, *t*-butylperoxy-2-ethylhexanoate, *t*-butylperoxy-3,5,5-trimethylhexanoate; *t*-butylperoxyneoheptanoate, *t*-butylperoxyneodecanoate, and *t*-butylperoxyacetate, α,α'-di(*t*-butylperoxy)diisopropylbenzene, *t*-butylcumylperoxide, di-*t*-butylperoxide, *t-*butylperoxyisopropylmonocarbonate, and *t*-butylperoxy-2-ethylhexylmonocarbonate, and among them *t-*butylperoxybenzoate is particularly preferable from the viewpoint of compatibility.

### I: azo compounds

Preferable I: azo compounds as the polymerization initiator that can be used in the present invention include those such as 2,2-azobisisobutyronitrile, 2,2'-azobispropionitrile, 1,1'-azobis(cyclohexane-1-carbonitrile), 2,2'-azobis(2-methylbutyronitrile), 2,2'-azobis(2,4-dimethylvaleronitrile), 2,2'-azobis(4-methoxy-2,4-dimethylvaleronitrile), 4,4'-azobis(4-cyanovaleric acid), dimethyl 2,2'-azobis(isobutyrate), 2,2'-azobis(2-methylpropionamideoxime), 2,2'-azobis[2-(2-imidazolin-2-yl)propane], 2,2'-azobis{2-methyl-*N*-[1,1-bis(hydroxymethyl)-2-hydroxyethyl]propionamide}, 2,2'-azobis[2-methyl-*N*-(2-hydroxyethyl)propionamide], 2,2'-azobis(*N*-butyl-2-methylpropionamide), 2,2'-azobis(*N*-cyclohexyl-2-methylpropionamide); 2,2'-azobis[*N*-(2-propenyl)-2-methyl-propionamide], 2,2'-azobis(2,4,4-trimethylpentane).

In addition, in the present invention, the c: organic peroxides as a polymerization initiator of the invention are preferable from the viewpoint of membranous (relief-forming layer) crosslinking property, furthermore, as an unexpected effect, a particularly preferable effect was found from the viewpoint of the improvement in engraving sensitivity.

Furthermore, a combination of c: an organic peroxide and Component B described above is preferable since the engraving sensitivity becomes very high.

This is presumed as follows. When the relief-forming layer is cured by thermal crosslinking using an organic peroxide, an organic peroxide that did not play a part in radical generation and has not reacted remains, and the remaining organic peroxide works as an autoreactive additive and decomposes exothermally in laser engraving. As the result, energy of generated heat is added to the radiated laser energy to thus raise the engraving sensitivity.

The effect thereof is remarkable when carbon black is used. It is considered that the heat generated from the carbon black is also transmitted to c: an organic peroxide and, as the result, heat is generated not only from the carbon black but also from the organic peroxide, and that the generation of heat energy to be used for the decomposition of Component A etc. occurs synergistically.

In the present invention, one type of polymerization initiator may be used on its own, or two or more types thereof may be used in combination.

In the present invention, the content of Component D in the resin composition for laser engraving is preferably 0.01 mass % to 20 mass %, more preferably 0.05 mass % to 10 mass %, and even more preferably 0.10 mass % to 7 mass % relative to the total solid content.

If the content of Component D is in the above range, printing durability is excellent, and thus it is preferable.

The resin composition for laser engraving of the present invention comprises Component A and Component B as essential components, and preferably comprises Components C and D as other components. As components other than Components C and D, Component E: a plasticizer, Component F: a filler, and Component G: a solvent can be exemplified, however the present invention is not limited thereto.

Components C to G do not comprise Components A and B, and contextually, if a compound corresponds to Component A or B, and also corresponds to Components C to G, the compound is considered to be Component A or B.

### Component E: plasticizer

From the viewpoint of imparting flexibility which is needed for relief printing plate, the resin composition for laser engraving of the present invention preferably further comprises a plasticizer as Component E.

A plasticizer known as a polymer plasticizer may be used without limitations; examples thereof include, as described in pp. 211 to 220 of 'Kobunshi Daijiten (Polymer Dictionary)' (first edition, 1994, Maruzen Co., Ltd.), an adipic acid derivative, an azelaic acid derivative, a benzoylic acid derivative, a citric acid derivative, an epoxy derivative, a glycol derivative, a hydrocarbon and a derivative thereof, an oleic acid derivative, a phosphoric acid derivative, a phthalic acid derivative, a polyester type, a ricinoleic acid derivative, a sebacic acid derivative, a stearic acid derivative, a sulfonic acid derivative, a terpene and a derivative thereof, and a trimellitic acid derivative. Among them, from the viewpoint of the large ability of reducing a glass transition temperature, an adipic acid derivative, a citric acid derivative, and a phosphoric acid derivative are preferable.

As the adipic acid derivative, dibutyl adipate and 2-butoxyethyl adipate are preferable.

As the citric acid derivative, tributyl citrate is preferable.

As the phosphoric acid derivative, tributyl phosphate, tri(2-ethylhexyl)phosphate, tributoxyethyl phosphate, triphenyl phosphate, cresyldiphenyl phosphate, tricresyl phosphate, *t*-butylphenyl phosphate and 2-ethylhexyldiphenyl phosphate are preferable.

In the resin composition for laser engraving of the present invention, one type of Component E may be used on its own, or two or more types thereof may be used in combination.

In a case where Component A is not a thermoplastic elastomer or a plastomer, Component E is preferably comprised. When Component E is added, the content of Component E in the resin composition for laser engraving of the present invention is preferably 1 mass % to 50 mass %, more preferably 10 mass % to 40 mass %, and even more preferably 20 mass % to 30 mass % relative to the total solid content of the resin composition, from the viewpoint of reducing a glass transition temperature.

### Component F: filler

The resin composition for laser engraving of the present invention preferably comprises Component F: a filler in order to improve the properties of the cured film of the resin composition for laser engraving.

As the filler, any known filler can be used, and examples include inorganic particles and organic resin particles.

As the inorganic particles, any known inorganic particles can be used, and examples include carbon nanotubes, fullerenes, graphite, silica, alumina, aluminum, and calcium carbonate.

As the organic resin particles, any known organic resin particles can be used, and preferred examples include thermally expandable microcapsules.

An example of the thermally expandable microcapsules may be EXPANCEL (manufactured by Akzo Nobel N.V.).

The resin composition for laser engraving of the present invention may use only one kind of Component F, or may use two or more kinds of Component F in combination.

The content of Component I: the filler in the resin composition for laser engraving of the present invention is preferably 0.01 mass % to 20 mass %, more preferably 0.05 mass % to 10 mass %, and particularly preferably 0.1 mass % to 5 mass %, relative to the total solids content of the resin composition.

### Component G: solvent

The resin composition for laser engraving of the present invention may comprise Component G: a solvent.

From the viewpoint of dissolving, a solvent used when preparing the resin composition for laser engraving of the present invention is preferably mainly an aprotic organic solvent. More specifically, they are used preferably at aprotic organic solvent/protic organic solvent = 100/0 to 50/50 (ratio by mass), more preferably 100/0 to 70/30, and particularly preferably 100/0 to 90/10.

Specific preferred examples of the aprotic organic solvent include acetonitrile, tetrahydrofuran, dioxane, toluene, propylene glycol monomethyl ether acetate, methyl ethyl ketone, acetone, methyl isobutyl ketone, ethyl acetate, butyl acetate, ethyl lactate, *N,N*-dimethylacetamide, *N*-methylpyrrolidone, dimethyl sulfoxide, and heptane.

Specific preferred examples of the protic organic solvent include methanol, ethanol, 1-propanol, 2-propanol, 1-butanol, 1-methoxy-2-propanol, ethylene glycol, diethylene glycol, and 1,3-propanediol.

Among these, Component G is preferably propylene glycol monomethyl ether acetate.

### <Other additives>

The resin composition for laser engraving of the present invention may comprise as appropriate various types of additives other than Component A to Component F as long as the effects of the present invention are not inhibited. Examples include a wax, a process oil, a metal oxide, an antiozonant, an anti-aging agent, a thermopolymerization inhibitor, a colorant, and a fragrance, and one type thereof may be used on its own or two more types may be used in combination.

The resin composition for laser engraving of the present invention preferably comprises a fragrance in order to reduce odor. A fragrance is effective in reducing odor during production of a relief printing plate precursor or during laser engraving. Examples of the fragrance include fragrances described in paragraphs 0081 to 0089 of JP-A-2011-245818.

In the resin composition for laser engraving of the present invention, as an additive for improving engraving sensitivity, it is preferable that a nitrocellulose or highly heat-conductive material be added.

The nitrocellulose is a self-reactive compound, during laser engraving, the nitrocellulose itself generates heat to assist the thermal decomposition of the coexisting binder polymer. As a result, it is assumed that engraving sensitivity is improved.

The highly heat-conductive material is added for the purpose of assisting heat conduction, and examples of the heat-conductive material include an inorganic compound such as metal particles and an organic compound such as a conductive polymer. As the metal particles, small gold particles, small silver particles, and small copper particles having a particle size in the order of micrometers to several nanometers are preferable. As the conductive polymer, a conjugated polymer is particularly preferable, and specific examples thereof include polyaniline and polythiophene.

In addition, by using a co-sensitizer, the sensitivity when the resin composition for laser engraving is cured by light is further improved.

Further, during the production and preservation of composition, it is preferable that a small amount of thermal polymerization inhibitor be added for preventing unnecessary thermal polymerization of the polymerizable compound.

For the purpose of coloring the resin composition for laser engraving, colorant such as dye or pigment may be added. Accordingly, properties such as visibility of the image section and aptitude for an image density measuring machine can be improved.

### (Relief printing plate precursor for laser engraving)

A first embodiment of the relief printing plate precursor for laser engraving of the present invention comprises a relief-forming layer formed from the resin composition for laser engraving of the present invention.

A second embodiment of the relief printing plate precursor for laser engraving of the present invention comprises a crosslinked relief-forming layer formed by crosslinking a relief-forming layer formed from the resin composition for laser engraving of the present invention.

In the present invention, the 'relief printing plate precursor for laser engraving' means both or one of a plate having a crosslinkable relief-forming layer formed from the resin composition for laser engraving in a state before being crosslinked and a plate in a state in which it is cured by light and/or heat.

In the present invention, the 'relief-forming layer' means a layer in a state before being crosslinked, that is, a layer formed from the resin composition for laser engraving of the present invention, which may be dried as necessary.

In the present invention, the 'crosslinked relief-forming layer' means a layer formed by crosslinking the relief-forming layer. The crosslinking is preferably carried out by means of heat and/or light. Furthermore, the crosslinking is not particularly limited as long as it is a reaction by which the resin composition is cured, and it is a concept that includes a structure crosslinked due to reactions between Component A's, between Component C's or between Component A and Component C.

Moreover, in the present invention, the 'relief layer' means a layer of the relief printing plate formed by engraving using a laser, that is, the crosslinked relief-forming layer after laser engraving.

The 'relief printing plate' is prepared by laser engraving a printing plate precursor having a crosslinked relief-forming layer.

When a printing plate precursor having a crosslinked relief-forming layer is laser-engraved, the "relief printing plate" is produced.

A relief printing plate precursor for laser engraving of the present invention comprises a relief-forming layer formed from the resin composition for laser engraving of the present invention, which has the above-mentioned components. The (crosslinked) relief-forming layer is preferably provided above a support.

The relief printing plate precursor for laser engraving may further comprise, as necessary, an adhesive layer between the support and the (crosslinked) relief-forming layer and, above the (crosslinked) relief-forming layer, a slip coat layer and a protection film.

### <Relief-forming layer>

The relief-forming layer is a layer formed from the resin composition for laser engraving of the present invention and is preferably a heat-crosslinkable layer.

As a mode in which a relief printing plate is prepared using the relief printing plate precursor for laser engraving, a mode in which a relief printing plate is prepared by crosslinking a relief-forming layer to thus form a relief printing plate precursor having a crosslinked relief-forming layer, and the crosslinked relief-forming layer (hard relief-forming layer) is then laser-engraved to thus form a relief layer is preferable. By crosslinking the relief-forming layer, it is possible to prevent abrasion of the relief layer during printing, and it is possible to obtain a relief printing plate having a relief layer with a sharp shape after laser engraving.

The relief-forming layer may be formed by molding the resin composition for laser engraving that has the above-mentioned components for a relief-forming layer into a sheet shape or a sleeve shape. The relief-forming layer is usually provided above a support, which is described later, but it may be formed directly on the surface of a member such as a cylinder of equipment for plate making or printing or may be placed and immobilized thereon, and a support is not always required.

A case in which the relief-forming layer is mainly formed in a sheet shape is explained as an example below.

### <Support>

A material used for the support of the relief printing plate precursor for laser engraving is not particularly limited, but one having high dimensional stability is preferably used, and examples thereof include metals such as steel, stainless steel, or aluminum, plastic resins such as a polyester (e.g. PET (polyethylene terephthalate), PBT (polybutylene terephthalate), or PAN (polyacrylonitrile)) or polyvinyl chloride, synthetic rubbers such as styrene-butadiene rubber, and glass fiber-reinforced plastic resins (epoxy resin, phenolic resin, etc.). As the support, a PET film or a steel substrate is preferably used. The configuration of the support depends on whether the relief-forming layer is in a sheet shape or a sleeve shape.

### <Adhesive layer>

An adhesive layer may be provided between the relief-forming layer and the support for the purpose of strengthening the adhesion between the two layers.

Examples of materials (adhesives) that can be used in the adhesive layer include those described in 'Handbook of Adhesives', Second Edition, Ed by I. Skeist, (1977).

### <Protection film, slip coat layer>

For the purpose of preventing scratches or dents in the relief-forming layer surface or the crosslinked relief-forming layer surface, a protection film may be provided on the relief-forming layer surface or the crosslinked relief-forming layer surface. The thickness of the protection film is preferably 25 to 500 µm, and more preferably 50 to 200 µm. The protection film may employ, for example, a polyester-based film such as PET or a polyolefin-based film such as PE (polyethylene) or PP (polypropylene). The surface of the film may be made matte. The protection film is preferably peelable.

When the protection film is not peelable or conversely has poor adhesion to the relief-forming layer, a slip coat layer may be provided between the two layers. The material used in the slip coat layer preferably employs as a main component a resin that is soluble or dispersible in water and has little tackiness, such as polyvinyl alcohol, polyvinyl acetate, partially saponified polyvinyl alcohol, a hydroxyalkylcellulose, an alkylcellulose, or a polyamide resin.

### (Process for producing relief printing plate precursor for laser engraving)

Process for producing a relief printing plate precursor for laser engraving is not particularly limited, and examples thereof include a process in which the resin composition for laser engraving is prepared, solvent is removed as necessary from this resin composition for laser engraving, and it is melt-extruded onto a support. Alternatively, a process may be employed in which the resin composition for laser engraving is cast onto a support, and this is dried in an oven to thus remove solvent from the resin composition.

Among them, the process for making a relief printing plate for laser engraving of the present invention is preferably a production process comprising a layer formation step of forming a relief-forming layer from the resin composition for laser engraving of the present invention and a crosslinking step of crosslinking the relief-forming layer by means of heat and/or light to thus obtain a relief printing plate precursor having a crosslinked relief-forming layer.

Subsequently, as necessary, a protection film may be laminated on the (crosslinked) relief-forming layer. Laminating may be carried out by compression-bonding the protection film and the relief-forming layer by means of heated calendar rollers, etc. or putting a protection film into intimate contact with a relief-forming layer whose surface is impregnated with a small amount of solvent.

When a protection film is used, a method in which a relief forming layer is first layered on a protection film and a support is then laminated may be employed.

When an adhesive layer is provided, it may be dealt with by use of a support coated with an adhesive layer. When a slip coat layer is provided, it may be dealt with by use of a protection film coated with a slip coat layer.

### <Layer formation step>

The process for producing a relief printing plate precursor for laser engraving of the present invention preferably comprises a layer formation step of forming a relief-forming layer from the resin composition for laser engraving of the present invention.

Preferred examples of a method for forming a relief-forming layer include a method in which the resin composition for laser engraving of the present invention is prepared, solvent is removed as necessary from this resin composition for laser engraving, and it is then melt-extruded onto a support, and a method in which the resin composition for laser engraving of the present invention is prepared, the resin composition for laser engraving of the present invention is cast onto a support, and this is dried in an oven to thus remove the solvent.

The resin composition for laser engraving may be produced by, for example, dissolving or dispersing Component A and Component B, and as optional components Component C to Component F, etc. in an appropriate solvent (Component G), and then mixing these liquids. Since it is preferable to remove most of the solvent component in a stage of producing a relief printing plate precursor, it is preferable to use as the solvent a volatile low-molecular-weight alcohol (e.g. methanol, ethanol, n-propanol, isopropanol, propylene glycol monomethyl ether), etc., and adjust the temperature, etc. to thus reduce as much as possible the total amount of solvent to be added.

The thickness of the (crosslinked) relief-forming layer in the relief printing plate precursor for laser engraving before and after crosslinking is preferably at least 0.05 mm but no greater than 10 mm, more preferably at least 0.05 mm but no greater than 7 mm, and yet more preferably at least 0.05 mm but no greater than 3 mm.

### <Crosslinking step>

The process for producing a relief printing plate precursor for laser engraving of the present invention is preferably a production process comprising a crosslinking step of crosslinking the relief-forming layer by means of heat to thus obtain a relief printing plate precursor having a crosslinked relief-forming layer.

The relief-forming layer may be crosslinked by heating the relief printing plate precursor for laser engraving (step of crosslinking by means of heat). As heating means, there can be cited a method in which a printing plate precursor is heated in a hot air oven or a far-infrared oven for a predetermined period of time and a method in which it is put into contact with a heated roller for a predetermined period of time.

Due to the relief-forming layer being crosslinked by heating, firstly, a relief formed after laser engraving becomes sharp and, secondly, tackiness of engraving residue formed when laser engraving is suppressed.

In the present invention, polymerizations between Component A's, between Component C's, and between Component A and Component C occur in the crosslinking step.

In addition, since by using a photopolymerization initiator or the like, the polymerizable compound is polymerized to form a crosslink, the crosslinking may be further carried out by means of light.

When the relief-forming layer comprises a photopolymerization initiator, the relief-forming layer may be crosslinked by irradiating the relief-forming layer with actinic radiation that triggers the photopolymerization initiator.

It is general to apply light to the entire surface of the relief-forming layer. Examples of the light (also called 'actinic radiation') include visible light, UV light, and an electron beam, but UV light is most preferably used. When the side where there is a substrate, such as a relief-forming layer support, for fixing the relief-forming layer, is defined as the reverse face, only the front face need be irradiated with light, but when the support is a transparent film through which actinic radiation passes, it is preferable to further irradiate the reverse face with light as well. When a protection film is present, irradiation from the front face may be carried out with the protection film as it is or after peeling off the protection film. Since there is a possibility of polymerization being inhibited in the presence of oxygen, irradiation with actinic radiation may be carried out after superimposing a polyvinyl chloride sheet on the relief-forming layer and evacuating.

### (Relief printing plate and process for making same)

The process for making a relief printing plate of the present invention comprises a layer formation step of forming a relief-forming layer from the resin composition for laser engraving of the present invention, a crosslinking step of crosslinking the relief-forming layer by means of heat to thus obtain a relief printing plate precursor having a crosslinked relief-forming layer, and an engraving step of laser-engraving the relief printing plate precursor having the crosslinked relief-forming layer.

The relief printing plate of the present invention is a relief printing plate having a relief layer obtained by crosslinking and laser-engraving a layer formed from the resin composition for laser engraving of the present invention, and is preferably a relief printing plate made by the process for making a relief printing plate of the present invention.

The relief printing plate of the present invention is preferably used when an aqueous ink is printed.

The layer formation step and the crosslinking step in the process for making a relief printing plate of the present invention mean the same as the layer formation step and the crosslinking step in the above-mentioned process for producing a relief printing plate precursor for laser engraving, and preferred ranges are also the same.

### <Engraving step>

The process for making a relief printing plate of the present invention preferably comprises an engraving step of laser-engraving the relief printing plate precursor having a crosslinked relief-forming layer.

The engraving step is a step of laser-engraving a crosslinked relief-forming layer that has been crosslinked in the crosslinking step to thus form a relief layer. Specifically, it is preferable to engrave a crosslinked relief-forming layer that has been crosslinked by irradiation with laser light according to a desired image, thus forming a relief layer. Furthermore, a step in which a crosslinked relief-forming layer is subjected to scanning irradiation by controlling a laser head using a computer in accordance with digital data of a desired image can preferably be cited.

This engraving step preferably employs an infrared laser. When irradiated with an infrared laser, molecules in the crosslinked relief-forming layer undergo molecular vibration, thus generating heat. When a high power laser such as a carbon dioxide laser or a YAG laser is used as the infrared laser, a large quantity of heat is generated in the laser-irradiated area, and molecules in the crosslinked relief-forming layer undergo molecular scission or ionization, thus being selectively removed, that is, engraved. The advantage of laser engraving is that, since the depth of engraving can be set freely, it is possible to control the structure three-dimensionally. For example, for an area where fine halftone dots are printed, carrying out engraving shallowly or with a shoulder prevents the relief from collapsing due to printing pressure, and for a groove area where a fine outline character is printed, carrying out engraving deeply makes it difficult for ink the groove to be blocked with ink, thus enabling breakup of an outline character to be suppressed.

In particular, when engraving is carried out using an infrared laser that corresponds to the absorption wavelength of the photothermal conversion agent, it becomes possible to selectively remove the crosslinked relief-forming layer at higher sensitivity, thus giving a relief layer having a sharp image.

As the infrared laser used in the engraving step, from the viewpoint of productivity, cost, etc., a carbon dioxide laser (a CO₂ laser) or a semiconductor laser is preferable. In particular, a fiber-coupled semiconductor infrared laser (FC-LD) is preferably used. In general, compared with a CO₂ laser, a semiconductor laser has higher efficiency laser oscillation, is less expensive, and can be made smaller. Furthermore, it is easy to form an array due to the small size. Moreover, the shape of the beam can be controlled by treatment of the fiber.

With regard to the semiconductor laser, one having a wavelength of 700 to 1,300 nm is preferable, one having a wavelength of 800 to 1,200 nm is more preferable, one having a wavelength of 860 to 1,200 nm is futher preferable, and one having a wavelength of 900 to 1,100 nm is particularly preferable.

Furthermore, the fiber-coupled semiconductor laser can output laser light efficiently by being equipped with optical fiber, and this is effective in the engraving step in the present invention. Moreover, the shape of the beam can be controlled by treatment of the fiber. For example, the beam profile may be a top hat shape, and energy can be applied stably to the plate face. Details of semiconductor lasers are described in 'Laser Handbook 2nd Edition' The Laser Society of Japan, and 'Applied Laser Technology' The Institute of Electronics and Communication Engineers, etc.

Moreover, as plate making equipment comprising a fiber-coupled semiconductor laser that can be used suitably in the process for making a relief printing plate employing the relief printing plate precursor of the present invention, those described in detail in JP-A-2009-172658 and JP-A-2009-214334 can be cited.

The process for making a relief printing plate of the present invention may as necessary further comprise, subsequent to the engraving step, a rinsing step, a drying step, and/or a post-crosslinking step, which are shown below.

Rinsing step: a step of rinsing the engraved surface by rinsing the engraved relief layer surface with water or a liquid containing water as a main component.

Drying step: a step of drying the engraved relief layer.

Post-crosslinking step: a step of further crosslinking the relief layer by applying energy to the engraved relief layer.

After the above steps, a rinsing step of washing off engraving residue by rinsing the engraved surface with water or a liquid containing water as a main component may be added. Examples of rinsing means include a method in which washing is carried out with tap water, a method in which high pressure water is spray-jetted, and a method in which the engraved surface is brushed in the presence of mainly water using a known batch or conveyor brush type washout machine, and when slime due to engraving residue cannot be eliminated, a rinsing liquid to which a soap or a surfactant is added may be used.

When the rinsing step of rinsing the engraved surface is carried out, it is preferable to add a drying step of drying an engraved relief-forming layer so as to evaporate rinsing liquid.

Furthermore, as necessary, a post-crosslinking step for further crosslinking the relief-forming layer may be added. By carrying out a post-crosslinking step, which is an additional crosslinking step, it is possible to further strengthen the relief formed by engraving.

The pH of the rinsing liquid that can be used in the present invention is preferably at least 9, more preferably at least 10, and yet more preferably at least 11. The pH of the rinsing liquid is preferably no greater than 14, more preferably no greater than 13.5, yet more preferably no greater than 13.2, and particularly preferably no greater than 12.5. When in the above-mentioned range, handling is easy.

In order to set the pH of the rinsing liquid in the above-mentioned range, the pH may be adjusted using an acid and/or a base as appropriate, and the acid or base used is not particularly limited.

The rinsing liquid that can be used in the present invention preferably comprises water as a main component.

The rinsing liquid may comprise as a solvent other than water a water-miscible solvent such as an alcohol, acetone, or tetrahydrofuran.

The rinsing liquid preferably comprises a surfactant.

From the viewpoint of removability of engraving residue and little influence on a relief printing plate, preferred examples of the surfactant that can be used in the present invention include betaine compounds (amphoteric surfactants) such as a carboxybetaine compound, a sulfobetaine compound, a phosphobetaine compound, an amine oxide compound, and a phosphine oxide compound.

Furthermore, examples of the surfactant also include known anionic surfactants, cationic surfactants, amphoteric surfactants, and nonionic surfactants. Moreover, a fluorine-based or silicone-based nonionic surfactant may also be used in the same manner.

With regard to the surfactant, one type may be used on its own or two or more types may be used in combination.

It is not necessary to particularly limit the amount of surfactant used, but it is preferably 0.01 to 20 mass % relative to the total weight of the rinsing liquid, and more preferably 0.05 to 10 mass %.

The relief printing plate of the present invention having a relief layer on the surface of any substrate such as a surpport etc. may be produced as described above.

From the viewpoint of satisfying suitability for various aspects of printing, such as abrasion resistance and ink transfer properties, the thickness of the relief layer of the relief printing plate is preferably at least 0.05 mm but no greater than 10 mm, more preferably at least 0.05 mm but no greater than 7 mm, and yet more preferably at least 0.05 mm but no greater than 3 mm.

Furthermore, the Shore A hardness of the relief layer of the relief printing plate is preferably at least 50° but no greater than 90°. When the Shore A hardness of the relief layer is at least 50°, even if fine halftone dots formed by engraving receive a strong printing pressure from a letterpress printer, they do not collapse and close up, and normal printing can be carried out. Furthermore, when the Shore A hardness of the relief layer is no greater than 90°, even for flexographic printing with kiss touch printing pressure it is possible to prevent patchy printing in a solid printed part.

The Shore A hardness in the present specification is a value measured at 25°C by a durometer (a spring type rubber hardness meter) that presses an indenter (called a pressing needle or indenter) into the surface of a measurement target so as to deform it, measures the amount of deformation (indentation depth), and converts it into a numerical value.

The relief printing plate of the present invention is particularly suitable for printing by a flexographic printer using an aqueous ink, but printing is also possible when it is carried out by a relief printer using any of aqueous, oil-based, and UV inks, and printing is also possible when it is carried out by a flexographic printer using a UV ink. The relief printing plate of the present invention has excellent rinsing properties, there is no engraving residue, since a relief layer obtained has excellent elasticity aqueous ink transfer properties and printing durability are excellent, and printing can be carried out for a long period of time without plastic deformation of the relief layer or degradation of printing durability.

### Examples

Hereinafter, the present invention will be described in further detail with reference to Examples, but the present invention is not limited to Examples. Furthermore, 'parts' and '%' in the description below mean 'parts by mass' and 'mass %' unless otherwise specified. Here, weight-average molecular weights (Mw) and number-average molecular weights (Mn) of compounds in Examples indicate values measured by gel permeation chromatography (GPC) (eluent: tetrahydrofuran) unless specified otherwise.

The details of the components used in respective Examples and Comparative Examples are as follows.

### Component A: Binder polymer

A-1: Styrene butadiene rubber (manufactured by JSR Corporation, TR2000, MFR (200°C, 49.0 N): 13 (g/10 minutes), thermoplastic elastomer)
A-2: Acrylonitrile butadiene rubber (manufactured by JSR Corporation, N230S, acrylonitrile content: 35%, thermoplastic elastomer)
A-3: Natural rubber (manufactured by Nomura Trading Co., Ltd., NR, Mw: 150,000, plastomer)
A-4: Chloroprene rubber (manufactured by Tosoh Corporation, Skyprene B-10, thermoplastic elastomer)
A-5: Styrene-isoprene-styrene block copolymer (manufactured by JSR Corporation, SIS 5200, MFR (200°C, 49 N): 9.5 g/10 minutes, thermoplastic elastomer)
A-6: Styrene-butadiene-styrene block copolymer (manufactured by Kraton Performance Polymers Inc., Kraton D1102JSZ, MFR (200°C, 5 kg): 6 g/10 minutes, thermoplastic elastomer)
A-7: Polyisoprene (manufactured by JSR Corporation, IR 2200, Mn: 472,000, plastomer)
A-8: Polybutadiene (manufactured by UBE Industries, Ltd., BR150L, plastomer)
A-9: Isobutene-isoprene copolymer (manufactured by JSR Corporation, BUTYL 065, plastomer)
A-10: Polybutadiene diacrylate (manufactured by Osaka Organic Chemical Industry Ltd., BAC-45, Mn: 5,000, plastomer)
A-11: Methacrylate-introduced polyisoprene (manufactured by Kuraray Co., Ltd., LIR-203, Mn: 35,000, plastomer)
A-12: hydrogenated polyisoprene (manufactured by Kuraray Co., Ltd., LIR-290, Mn: 31,000, plastomer)
A-13: Polyvinyl alcohol (manufactured by Nippon Synthetic Chemical Industry Co., Ltd., GOHSENX T-350, reduced specific viscosity: 110 mPa·s (8% aqueous solution, 40°C))
A-14: Polyvinyl butyral (manufactured by Denki Kagaku Kogyo Kabishiki Kaisha, Denka butyral # 3000-2, weight average molecular weight: 90,000)
A-15: Polyurethane acrylate (manufactured by Nippon Synthetic Chemical Industry Co., Ltd., SHIKOH UV-3630 ID80, viscosity: 10,000 to 30,000 mPa·s (60°C), plastomer)
A-16: Ether-based polyurethane (manufactured by Dainichiseika Color & Chemicals Mfg. Co., Ltd., Resamine ME8105LP, Mn: 35,000, plastomer)
A-17: Polyamide (manufactured by Daicel-Evonik Ltd., DIAMID E40-S1, MFR (190°C, 2.16 kg): 20 cm³/10 minutes, thermoplastic elastomer)
A-18: Polyvinyl acetate (manufactured by Alfa Aesar, Mw: 100, 000)
A-19: Polylactic acid (manufactured by Miyoshi Oil & Fat Co., Ltd., LANDY PL-2000, Mn: 35,000)
A-20: Polyurea (manufactured by Diawa Corporation board Japanese-made, FreAmine M, fluidity: 20 s/mm to 30 s/mm (140°C to 150°C))

### Component B: Carbon black

pH and the average particle size in water of Component B are values measured in the manners described above.
B-1: CAB-O-JET® 300 (manufactured by Cabot Corporation, pH: 7.8, average particle size in water: 135 nm, neutralized acid group content: 0.35 meq/g)
B-2: CAB-O-JET® 400 (manufactured by Cabot Corporation, pH: 9.0, average particle size in water: 140 nm, neutralized acid group content: 0.38 meq/g)
B-3: Aqua-Black® 162 (manufactured by Tokai Carbon Co., Ltd., pH: 6.5, average particle size in water: 120 nm, neutralized acid group content: 0.31 meq/g)
B-4: Aqua-Black® 001 (manufactured by Tokai Carbon Co., Ltd., pH: 7.5, average particle size in water: 170 nm, neutralized acid group content: 0.32 meq/g)
B-5: Bonjet® Black CW-1 (manufactured by Orient Chemical Industries Co., Ltd., pH: 7.0, average particle size in water: 70 nm, neutralized acid group content: 0.35 meq/g)
B-6: Bonjet® Black CW-2 (manufactured by Orient Chemical Industries Co., Ltd., pH: 7.0, average particle size in water: 170 nm, neutralized acid group content: 0.33 meq/g)
B-7: #44 (manufactured by Mitsubishi Chemical Corporation, pH: 8.0, average particle size in water: 850 nm, neutralized acid group content: 0.01 meq/g)
B-8: TB#A700F (manufactured by Tokai Carbon Co., Ltd., pH: 3.0, average particle size in water: 320 nm, neutralized acid group content: 0.00 meq/g)
B-9: #MA220 (manufactured by Mitsubishi Chemical Corporation, pH: 3.0, average particle size in water: 260 nm, neutralized acid group content: 0.00 meq/g)
B-10: Special Black 100 (manufactured by Degussa, pH: 3.0, average particle size in water: 275 nm, neutralized acid group content: 0.00 meq/g)
B-11: #4350 (manufactured by Mitsubishi Chemical Corporation, pH: 10.0, average particle size in water: 835 nm, neutralized acid group content: 0.02 meq/g) Component C: Radical polymerizable compound
C-1: A-HD-N: 1,6-hexanediol diacrylate

### Component D: Polymerization Initiator

Perbutyl Z: manufactured by NOF CORPORATION, *t*-butylperoxybenzoate Component E: Plasticizer
Dibutyl adipate (manufactured by Inoue Perfumery MFG. Co., Ltd.)

### 1. Preparation of resin composition for laser engraving

Each of Components A, B, C, and E in the amount described in Table 1 was put into a three-neck flask equipped with a stirring blade and a cooling tube, and the mixed solution was heated at 40°C for 30 minutes while stirring.

Then, Component D in the amount described in Table 1 was added thereto, followed by further stirring for 30 minutes.

By the operation, coating solutions for a crosslinkable relief-forming layer having fluidity (resin compositions for laser engraving) were obtained respectively. In a case of being described as "-" in Table 1, it means that the component was not added in the above.

### 2. Preparation of relief printing plate precursor for laser engraving

A spacer (frame) having a predetermined thickness was placed on a PET substrate. Thereafter, each of the resin compositions for laser engraving of Examples 1 to 30 and Comparative Examples 1 to 11 obtained as above was gently cast such that it did not overflow from the spacer (frame), and heated in an oven at 90°C so as to provide a relief-forming layer having a thickness of about 1 mm. In this manner, relief printing plate precursors for laser engraving were prepared respectively. At this time, heating was performed in the oven at 90°C until surface tackiness completely disappeared, such that thermal crosslinking occurred.

### 3. Preparation of relief printing plate

Each of the crosslinked relief-forming layers was engraved using two types of lasers described below.

As a carbon dioxide laser engraving machine, a high-quality CO₂ laser marker ML-9100 series (manufactured by Keyence Corporation) was used. In the printing plate precursor for laser engraving, a solid area of 1 cm² was subjected to raster engraving by the carbon dioxide laser engraving machine, under conditions of an output of 12 W, a head speed of 200 mm/s, and a pitch setting of 2,400 DPI.

As a semiconductor laser engraving machine, a laser recording device equipped with a fiber-coupled semiconductor laser (FC-LD) SDL-6390 (manufactured by JDS Uniphase Corporation, wavelength of 915 nm) with a maximum output of 8.0 W was used. The semiconductor laser engraving machine was used to raster-engrave a solid area of 1 cm² under conditions of a laser output of 7.5 W, a head speed of 409 mm/s, and a pitch setting of 2,400 DPI.

A ultramicrotome sample piece of a thickness of 2 µm was prepared from each of the relief printing plates, a number average value (number of measurement: 100) of equivalent circle diameters of aggregates was measured using an electron microscope (magnification of 100 times), and the particle size of Component B in the resin composition was obtained.

### 4. Evaluation of relief printing plate

The performance of the relief printing plate was evaluated in terms of the following items, and the results are shown in Table 1.

### (4-1) Engraving depth

"Engraving depth" of the relief layer obtained by laser-engraving the relief-forming layer which the relief printing plate precursor has was measured in the following manner. Here, "Engraving depth" refers to a difference between an engraved position (height) and an unengraved position (height) when observing the cross section of the relief layer. "Engraving depth" in each of Examples was measured by observing the cross section of the relief layer using a ultra-depth color 3D Profile Microscope VK9510 (manufactured by Keyence Corporation). A large engraving depth means high engraving sensitivity. The results are shown in Table 1 for each type of laser used for engraving.

### (4-2) Rinsing properties

The laser-engraved plate engraved with the carbon dioxide laser engraving machine was immersed in water, and the engraved portion was rubbed 2 times against a toothbrush (manufactured by Lion Corporation, Clinica toothbrush flat). Thereafter, the surface of relief layer was observed with an optical microscope so as to check the presence of residues. The evaluation criteria are as follows. When the evaluation criterion is 3 or more, there is no practical problem.
5: Engraving residues are not present
4: Engraving residues are not practically present
3: Small amount of engraving residues remain
2: Large amount of engraving residues remain
1: Engraving residues are not removed at all

### (4-3) Engraved shape

An edge portion of thalweg and ridge line prepared under the engraving conditions described above using the carbon dioxide laser engraving machine was visually observed at a magnification of 300 times using a microscope VHX-1000 (manufactured by Keyence Corporation). The evaluation criteria are as follows. When the evaluation criterion is 3 or more, there is no practical problem.
5: Engraving edge shape is sharp
4: Engraving edge shape is somewhat sharp
3: Engraving edge shape is somewhat sharp, but unevenness is observed at several places
2: Engraving edge shape is not sharp, and unevenness is observed
1: Engraving edge shape is not sharp, and large unevenness is observed

**Table 1**

| | Component A | | Component B | | | Component C | Component D | Component E | Evaluation | | | |
|---|---|---|---|---|---|---|---|---|---|---|---|---|
| | Type | Added amount (mass %) | Type | Added amount (mass %) | Particle size in resin composition (nm) | Added amount (mass %) | Added amount (mass %) | Added amount (mass %) | Engraving depth (µm) FC-LD | Engraving depth (µm) CO₂ laser | Rinsing properties | Engraved shape |
| Example 1 | A-1 | 85 | B-1 | 15 | 800 | - | - | - | 405 | 306 | 3 | 3 |
| Example 2 | A-1 | 70 | B-1 | 5 | 800 | 20 | 5 | - | 420 | 374 | 4 | 4 |
| Example 3 | A-2 | 70 | B-1 | 5 | 750 | 20 | 5 | - | 419 | 373 | 3 | 3 |
| Example 4 | A-3 | 70 | B-1 | 5 | 780 | 20 | 5 | - | 420 | 374 | 3 | 3 |
| Example 5 | A-4 | 70 | B-1 | 5 | 800 | 20 | 5 | - | 418 | 370 | 4 | 4 |
| Example 6 | A-5 | 70 | B-1 | 5 | 750 | 20 | 5 | - | 418 | 370 | 5 | 5 |
| Example 7 | A-6 | 70 | B-1 | 5 | 800 | 20 | 5 | - | 421 | 375 | 5 | 5 |
| Example 8 | A-7 | 70 | B-1 | 5 | 580 | 20 | 5 | - | 430 | 380 | 5 | 5 |
| Example 9 | A-8 | 70 | B-1 | 5 | 590 | 20 | 5 | - | 435 | 384 | 5 | 5 |
| Example 10 | A-8 | 85 | B-1 | 10 | 590 | - | 5 | - | 438 | 383 | 5 | 5 |
| Example 11 | A-8 | 70 | B-2 | 5 | 550 | 20 | 5 | - | 436 | 380 | 5 | 5 |
| Example 12 | A-8 | 70 | B-3 | 5 | 580 | 20 | 5 | - | 430 | 383 | 5 | 5 |
| Example 13 | A-8 | 70 | B-4 | 5 | 500 | 20 | 5 | - | 440 | 390 | 5 | 5 |
| Example 14 | A-8 | 70 | B-5 | 5 | 550 | 20 | 5 | - | 435 | 387 | 5 | 5 |
| Example 15 | A-8 | 70 | B-6 | 5 | 550 | 20 | 5 | - | 435 | 387 | 5 | 5 |
| Example 16 | A-8 | 68 | B-3 | 10 | 500 | 17 | 5 | - | 436 | 385 | 5 | 5 |
| Example 17 | A-8 | 58 | B-3 | 25 | 590 | 13 | 4 | - | 430 | 383 | 5 | 5 |
| Example 18 | A-8 | 45 | B-3 | 45 | 580 | 6 | 4 | - | 432 | 386 | 4 | 5 |
| Example 19 | A-9 | 70 | B-1 | 5 | 750 | 20 | 5 | - | 420 | 374 | 4 | 4 |
| Example 20 | A-10 | 70 | B-1 | 5 | 750 | 20 | 5 | - | 419 | 373 | 3 | 3 |
| Example 21 | A-11 | 70 | B-1 | 5 | 780 | 20 | 5 | - | 419 | 373 | 3 | 3 |
| Example 22 | A-12 | 70 | B-1 | 5 | 690 | 20 | 5 | - | 420 | 374 | 3 | 3 |
| Example 23 | A-13 | 54 | B-1 | 5 | 800 | 16 | 5 | 20 | 410 | 365 | 4 | 3 |
| Example 24 | A-14 | 54 | B-1 | 5 | 800 | 16 | 5 | 20 | 409 | 364 | 4 | 3 |
| Example 25 | A-15 | 70 | B-1 | 5 | 740 | 20 | 5 | - | 415 | 369 | 4 | 4 |
| Example 26 | A-16 | 70 | B-1 | 5 | 740 | 20 | 5 | - | 416 | 370 | 4 | 4 |
| Example 27 | A-17 | 70 | B-1 | 5 | 780 | 20 | 5 | - | 413 | 368 | 3 | 4 |
| Example 28 | A-18 | 54 | B-1 | 5 | 800 | 16 | 5 | 20 | 415 | 369 | 4 | 3 |
| Example 29 | A-19 | 54 | B-1 | 5 | 800 | 16 | 5 | 20 | 408 | 363 | 4 | 3 |
| Example 30 | A-20 | 70 | B-1 | 5 | 800 | 20 | 5 | - | 410 | 365 | 3 | 4 |
| Comp. Example 1 | A-1 | 75 | - | - | - | 20 | 5 | - | 0 | 280 | 1 | 1 |
| Comp. Example 2 | A-1 | 0 | B-1 | 17 | 800 | 67 | 16 | - | 150 | 120 | 1 | 1 |
| Comp. Example 3 | A-1 | 70 | B-7 | 5 | 1,750 | 20 | 5 | - | 360 | 310 | 1 | 2 |
| Comp. Example 4 | A-6 | 70 | B-7 | 5 | 1,800 | 20 | 5 | - | 365 | 315 | 1 | 1 |
| Comp. Example 5 | A-8 | 70 | B-7 | 5 | 1,700 | 20 | 5 | - | 380 | 325 | 1 | 2 |
| Comp. Example 6 | A-16 | 70 | B-7 | 5 | 1,300 | 20 | 5 | - | 378 | 325 | 1 | 2 |
| Comp. Example 7 | A-1 | 45 | B-7 | 45 | 1,350 | 6 | 4 | - | 368 | 320 | 2 | 2 |
| Comp. Example 8 | A-1 | 70 | B-8 | 5 | 1,100 | 20 | 5 | - | 380 | 320 | 2 | 1 |
| Comp. Example 9 | A-1 | 70 | B-9 | 5 | 1,100 | 20 | 5 | - | 385 | 325 | 2 | 1 |
| Comp. Example 10 | A-1 | 70 | B-10 | 5 | 1,500 | 20 | 5 | - | 380 | 320 | 2 | 1 |
| Comp. Example 11 | A-1 | 70 | B-11 | 5 | 1,700 | 20 | 5 | - | 365 | 310 | 1 | 2 |

## Claims

1. A relief printing plate precursor for laser engraving, comprising:
a relief-forming layer formed of a resin composition for laser engraving; or
a crosslinked relief-forming layer obtained by crosslinking the relief-forming layer formed of the resin composition for laser engraving,
wherein the resin composition for laser engraving comprises a binder polymer having a weight average molecular weight of 5,000 or greater as Component A, and carbon black of which pH is higher than 6 as Component B,
**characterized in that** the carbon black has an average particle size when being dispersed into water equal to or less than 500 nm.

2. The relief printing plate precursor for laser engraving according to Claim 1, wherein pH of Component B is higher than 6 and equal to or lower than 9.

3. The relief printing plate precursor for laser engraving according to Claim 1 or 2, wherein the resin composition for laser engraving comprises Component B in an amount of equal to or greater than 1 mass % and equal to or less than 50 mass % relative to the total amount of the solid content of the resin composition for laser engraving.

4. The relief printing plate precursor for laser engraving according to any one of Claims 1 to 3, wherein Component B has a neutralized acid group on a surface thereof.

5. The relief printing plate precursor for laser engraving according to Claim 4, wherein the amount of the neutralized acid group is equal to or greater than 0.15 meq/g.

6. The relief printing plate precursor for laser engraving according to any one of Claims 1 to 5, wherein Component A is selected from a group consisting of a vinyl-based polymer, a polyamide resin, a polyurethane resin, a polyurea resin, and a polymerhaving a monomer unit derived from a conjugated diene hydrocarbon.

7. The relief printing plate precursor for laser engraving according to any one of Claims 1 to 6, wherein Component A is a thermoplastic elastomer or a plastomer.

8. The relief printing plate precursor for laser engraving according to any one of Claims 1 to 7, wherein the resin composition for laser engraving further comprises an ethylenically unsaturated compound as Component C.

9. The relief printing plate precursor for laser engraving according to any one of Claims 1 to 8, wherein the resin composition for laser engraving further comprises a polymerization initiator as Component D.

10. A process for producing the relief printing plate precursor for laser engraving according to any one of Claims 1 to 9, comprising:
a layer formation step of forming a relief-forming layer from the resin composition for laser engraving, and
a crosslinking step of crosslinking the relief-forming layer by means of heat to thus obtain a relief printing plate precursor having a crosslinked relief-forming layer.

11. A relief printing plate precursor for laser engraving obtained by the process according to Claim 10.

12. A process for making a relief printing plate, comprising an engraving step of laser-engraving the relief printing plate precursor according to any one of Claims 1 to 9 to thus form a relief layer.

13. A relief printing plate, comprising a relief layer made by the process for making a relief printing plate according to Claim 12.

## Patentansprüche

1. Reliefdruckplattenvorläufer für die Lasergravur, umfassend:
eine Relief-bildende Schicht, gebildet aus einer Harzzusammensetzung für die Lasergravur; oder
eine vernetzte Relief-bildende Schicht, erhalten durch Vernetzen der Relief-bildenden Schicht, die aus der Harzzusammensetzung für die Lasergravur gebildet ist,
worin die Harzzusammensetzung für die Lasergravur ein Bindepolymer mit einem gewichtsgemittelten Molekulargewicht von 5.000 oder größer als Komponente A und Ruß, dessen pH-Wert höher ist als 6, als Komponente B umfasst,
**dadurch gekennzeichnet, dass** der Ruß eine mittlere Partikelgröße, wenn er in Wasser dispergiert wird, aufweist, die gleich oder kleiner als 500 nm ist.

2. Reliefdruckplattenvorläufer für die Lasergravur gemäß Anspruch 1, worin der pH-Wert der Komponente B höher als 6 und gleich oder niedriger als 9 ist.

3. Reliefdruckplattenvorläufer für die Lasergravur gemäß Anspruch 1 oder 2, worin die Harzzusammensetzung für die Lasergravur die Komponente B in einer Menge von gleich oder größer als 1 Masse% und gleich oder kleiner als 50 Masse% enthält, relativ zur Gesamtmasse der festen Bestandteile der Harzzusammensetzung für die Lasergravur.

4. Reliefdruckplattenvorläufer für die Lasergravur gemäß irgendeinem der Ansprüche 1 bis 3, worin die Komponente B eine neutralisierte Säuregruppe auf einer Oberfläche hiervon aufweist.

5. Reliefdruckplattenvorläufer für die Lasergravur gemäß Anspruch 4, worin die Menge der neutralisierten Säuregruppe gleich zu oder größer als 0,15 Meq/g ist.

6. Reliefdruckplattenvorläufer für die Lasergravur gemäß irgendeinem der Ansprüche 1 bis 5, worin die Komponente A ausgewählt ist aus der Gruppe, bestehend aus Vinylbasierten Polymeren, Polyamidharzen, Polyurethanharzen, Polyharnstoffharzen und Polymeren mit einer Monomereinheit, die aus einem konjugierten Dien-Kohlenwasserstoff abgeleitet ist.

7. Reliefdruckplattenvorläufer für die Lasergravur gemäß irgendeinem der Ansprüche 1 bis 6, worin die Komponente A ein thermoplastisches Elastomer oder ein Plastomer ist.

8. Reliefdruckplattenvorläufer für die Lasergravur gemäß irgendeinem der Ansprüche 1 bis 7, worin die Harzzusammensetzung für die Lasergravur ferner eine ethylenisch ungesättigte Verbindung als Komponente C umfasst.

9. Reliefdruckplattenvorläufer für die Lasergravur gemäß irgendeinem der Ansprüche 1 bis 8, worin die Harzzusammensetzung für die Lasergravur ferner einen Polymerisationsinitiator als Komponente D umfasst.

10. Verfahren zur Herstellung des Reliefdruckplattenvorläufers für die Lasergravur gemäß irgendeinem der Ansprüche 1 bis 9, umfassend:
einen Schichtbildungsschritt zum Bilden einer Relief-bildenden Schicht aus der Harzzusammensetzung für die Lasergravur, und
einen Vernetzungsschritt zum Vernetzen der Relief-bildenden Schicht mittels Wärme, um so einen Reliefdruckplattenvorläufer mit einer vernetzten Relief-bildenden Schicht zu erhalten.

11. Reliefdruckplattenvorläufer für die Lasergravur, erhalten durch das Verfahren gemäß Anspruch 10.

12. Verfahren zur Herstellung einer Reliefdruckplatte, umfassend einen Eingravierungsschritt zum Laser-Eingravieren des Reliefdruckplattenvorläufers gemäß irgendeinem der Ansprüche 1 bis 9, um somit eine Reliefschicht zu bilden.

13. Reliefdruckplatte, umfassend eine Reliefschicht, die durch das Verfahren zur Herstellung einer Reliefdruckplatte gemäß Anspruch 12 hergestellt ist.

## Revendications

1. Précurseur de plaque d'impression en relief pour une gravure au laser, comprenant :
une couche formant un relief formée à partir d'une composition de résine pour une gravure au laser ; ou
une couche réticulée formant un relief obtenue par réticulation de la couche formant un relief formée à partir de la composition de résine pour une gravure au laser,
dans lequel la composition de résine pour une gravure au laser comprend un polymère liant ayant une masse moléculaire moyenne en poids de 5 000 ou plus en tant que Composant A et du noir de carbone dont le pH est supérieur à 6 en tant que Composant B,
**caractérisé en ce que** le noir de carbone a une taille moyenne de particules, lorsqu'il est dispersé dans de l'eau, inférieure ou égale à 500 nm.

2. Précurseur de plaque d'impression en relief pour une gravure au laser selon la revendication 1, dans lequel le pH du Composant B est supérieur à 6 et inférieur ou égal à 9.

3. Précurseur de plaque d'impression en relief pour une gravure au laser selon la revendication 1 ou 2, dans lequel la composition de résine pour une gravure au laser comprend le Composant B en une quantité supérieure ou égale à 1 % en masse et inférieure ou égale à 50 % en masse par rapport à la quantité totale de teneur en matières solides de la composition de résine pour une gravure au laser.

4. Précurseur de plaque d'impression en relief pour une gravure au laser selon l'une quelconque des revendications 1 à 3, dans lequel le Composant B a un groupe acide neutralisé sur une surface de celui-ci.

5. Précurseur de plaque d'impression en relief pour une gravure au laser selon la revendication 4, dans lequel la quantité de groupe acide neutralisé est supérieure ou égale à 0,15 meq/g.

6. Précurseur de plaque d'impression en relief pour une gravure au laser selon l'une quelconque des revendications 1 à 5, dans lequel le Composant A est choisi dans le groupe constitué d'un polymère à base de vinyle, d'une résine de polyamide, d'une résine de polyuréthane, d'une résine de polyurée et d'un polymère comprenant un motif monomère dérivé d'un hydrocarbure de type diène conjugué.

7. Précurseur de plaque d'impression en relief pour une gravure au laser selon l'une quelconque des revendications 1 à 6, dans lequel le Composant A est un élastomère thermoplastique ou un plastomère.

8. Précurseur de plaque d'impression en relief pour une gravure au laser selon l'une quelconque des revendications 1 à 7, dans lequel la composition de résine pour une gravure au laser comprend en outre un composé à insaturation éthylénique en tant que Composant C.

9. Précurseur de plaque d'impression en relief pour une gravure au laser selon l'une quelconque des revendications 1 à 8, dans lequel la composition de résine pour une gravure au laser comprend en outre un initiateur de polymérisation en tant que Composant D.

10. Procédé de production du précurseur de plaque d'impression en relief pour une gravure au laser selon l'une quelconque des revendications 1 à 9, comprenant :
une étape de formation d'une couche pour former une couche de formation d'un relief à partir de la composition de résine pour une gravure au laser, et
une étape de réticulation pour réticuler la couche de formation d'un relief au moyen de chaleur pour donner ainsi un précurseur de plaque d'impression en relief ayant une couche réticulée formant un relief.

11. Précurseur de plaque d'impression en relief pour une gravure au laser obtenu par le procédé selon la revendication 10.

12. Procédé de fabrication d'une plaque d'impression en relief, comprenant une étape de gravure pour graver au laser le précurseur de plaque d'impression en relief selon l'une quelconque des revendications 1 à 9 pour ainsi former une couche en relief.

13. Plaque d'impression en relief, comprenant la couche en relief fabriquée par le procédé de fabrication d'une plaque d'impression en relief selon la revendication 12.
